# EUROPEAN PATENT APPLICATION

(11) **EP 1 650 264 A1**
(43) Date of publication of application: **26.04.2006**
(21) Application number: 04747554.6
(22) Date of filing: 08.07.2004
(51) Int. Cl.: C08L 101/00, C08K 9/04, C09C 3/10, B82B 3/00

(54) **RESIN COMPOSITION CONTAINING ULTRAFINE PARTICLES**

(30) Priority: 25.07.2003 JP 2003279684
(71) Applicant: KANEKA CORPORATION, Osaka-shi, Osaka 530-8288 (JP)
(72) Inventor: MATSUMOTO, Kazuaki, Yao-shi, Osaka 5810041 (JP); TSUJI, Ryotaro Kaneka Corporation Osaka Factory, Settsu-shi, Osaka 5660072 (JP); YOSHIDA, T. Kaneka Corporation Osaka Factory, Settsu-shi, Osaka 5660072 (JP)
(74) Representative: Vossius & Partner
(86) International application number: PCT/JP2004/010088
(87) International publication number: WO 2005/010100

(57) **Abstract**

The present invention provides a resin composition containing ultrafine particles exhibiting excellent properties absent from conventional materials. The resin composition is produced by uniformly dispersing, in a resin, metal or semiconductor ultrafine particles with the surfaces modified with a polymer. Specifically, a polymer having a mercapto group at one end is produced by radical polymerization of an unsaturated monomer in the presence of a specified thiocarbonylthio group-containing compound and then treating the resultant polymer with a treating agent, and the surfaces of the ultrafine particles are modified with the polymer having a mercapto group at one end to prepare the polymer-modified ultrafine particles. The polymer-modified ultrafine particles are mixed with a resin to achieve the resin composition containing the ultrafine particles uniformly dispersed in the resin.

## Description

### Technical Field

The present invention relates to a resin composition containing metal or semiconductor ultrafine particles which are uniformly dispersed therein, and a process for producing the resin composition. In detail, the present invention relates to a resin composition containing ultrafine particles smaller than conventional metal or semiconductor particles dispersed in resin compositions so that the resin composition containing ultrafine particles exhibits the properties such as optical properties, thermal and mechanical properties, electric properties, magnetic properties, which are inherent in ultrafine particles. The present invention also relates to a process for producing the resin composition.

### Background Art

Ultrafine particles with a particle size of 1 to 100 nm attract attention because they have various mechanical, optical, and magnetic properties in comparison with particles produced by ordinary mechanical grinding or the like and having a particle size of micrometer or more, and have significant difference in chemical reactivity from the ordinary particles. Examples of phenomena which occur with decrease in particle size, but not occur in bulk materials, include an increase in carrier kinetic energy due to a confinement effect, an external dielectric effect, an increase in band gap, a decrease in electron affinity energy, an increase in ionization potential, improvement in carrier recombination efficiency, and the like. Such peculiar physical properties can be applied to functional materials for EL elements, photoconductive elements, piezo elements, and the like. In order to make use of the characteristics of ultrafine particles, it is generally desired to uniformly disperse the ultrafine particles in a medium without aggregation and coagulation. However, since the ultrafine particles have extremely high surface energy, the ultrafine particles easily aggregate, and aggregated particles easily bond together to produce larger particles. In addition, once aggregation and coagulation occur to increase the particle size, re-dispersion becomes very difficult. Furthermore, inorganic ultrafine particles have high surface polarity and are thus difficult to use as dispersion in an organic medium such as an organic solvent with low polarity, a polymer, or the like. In particular, it is generally very difficult to uniformly disperse ultrafine particles in a polymeric material, such as a polymer or the like because a polymer and ultrafine particles generally have significantly different polarities, a polymer solution or melt has high viscosity and thus has difficulty in applying a mechanical dispersion force thereto, and the like.

In order to uniformly disperse ultrafine particles in a polymer, it is generally required to use a special method, such as a method of synthesizing particles in the presence of a polymer (for example, S. Ogawa et al., Jpn. J. Appl. Phys., 33, L331 (1994), Q. Song et al., J. Nanoparticle. Res., 2, 381 (2000), etc.), a method of polymerzing to produce a polymer from particle surfaces in the presence of particles (for example, T. K. Mandal et al., Nano Lett., 2, 3 (2002), S. Hirano et al., J. Eur. Ceram. Soc., 21, 1479 (2001), etc.), or the like. Therefore, a resin composition containing ultrafine particles is expensive in spite of its many excellent characteristics, and the range of applications is limited. Under present conditions, therefore, such a resin composition has not yet been industrially polularized.

On the other hand, by using the characteristic that an organic thiol compound easily bonds to a metal surface or a semiconductor surface, organic modification methods for ultrafine particle surfaces using a compound having a thiol group in its molecule have been variously studied. For example, as disclosed in Japanese Unexamined Patent Application Publication No. 11-60581 and S. Huang et al., J. Vac. Sci. Technol., B19, 2045 (2001), ultrafine particles capable of uniform dispersion in an organic solvent can be obtained. By using this method, ultrafine particles capable of stable dispersion in an organic solvent can be obtained. However, even by using the same method, it is difficult to uniformly disperse ultrafine particles in a polymeric material such as a polymer or the like because a surface modifier and a polymer have different polarities and viscosities.

In order to resolve these problems, for example, in M. K. Corbierr et al., J. Am. Chem. Soc., 123, 10411 (2001), a polymer having a controlled molecular weight and a controlled terminal group is first produced by anionic polymerization, the terminal group is substituted by propylene sulfide, and then a polymer having a terminal mercapto group is produced and used for modifying the surfaces of metal ultrafine particles, thereby realizing uniform dispersion of the metal ultrafine particles in a polymer. This method is highly interesting from the viewpoint that a composition containing uniformly dispersed ultrafine particles can be obtained by simply mixing a previously prepared polymer and previously synthesized ultrafine particles. However, in this method, the types of polymers produced by the polymerization are limited, and many steps of terminal substitution reaction are required for obtaining a polymer for modifying ultrafine particles. Therefore, this method cannot be said as a general-purpose technique applicable on the scale of industrialization.

### Disclosure of Invention

Considering the above-mentioned situation, the present invention is aimed at providing a resin composition containing uniformly dispersed ultrafine particles of a metal or a semiconductor.

As a result of intensive research for resolving the above-described problems, the inventors of the present invention could obtain a resin composition containing uniformly dispersed ultrafine particles by a method including producing a polymer having a mercapto group at one end by reaction using reversible addition-fragmentation chain transfer (RAFT) polymerization, modifying the surfaces of ultrafine particles of a metal or a semiconductor with the resultant polymer, and then mixing a resin compatible with the polymer and the modified ultrafine particles. The inventors also found that such a resin composition containing ultrafine particles can be easily applied to a large variety of combinations of polymers and ultrafine particles, and resin compositions containing respective various types of ultrafine particles in respective various resins can be industrially, very easily produced. This resulted in the achievement of the present invention.

In other words, in a first aspect of the present invention, the present invention relates to a resin composition containing ultrafine particles prepared by mixing polymer-modified ultrafine particles in a resin, the polymer-modified ultrafine particles being produced by modifying the surfaces of the ultrafine particles with a polymer having a mercapto group at one end. The polymer having a mercapto group at one end is produced by treating a polymer with a treating agent, the polymer being produced by radical polymerization of a radically polymerizable unsaturated monomer in the presence of a thiocarbonylthio group-containing compound.

In a preferred embodiment, the above-described resin composition containing ultrafine particles is characterized in that:
(1) the thiocarbonylthio group-containing compound is represented by general formula (1): 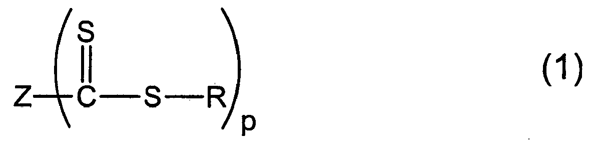 (wherein R represents a monovalent organic group having 1 or more carbon atoms; Z represents a sulfur atom (when p = 2), an oxygen atom (when p = 2), a nitrogen atom (when p = 3), or a p-valent organic group having 1 or more carbon atoms; p represents an integer of 1 or more; and when p is 2 or more, Rs may be the same or different);
(2) the number-average primary particle size of the ultrafine particles in an unaggregated state is 100 nm or less;
(3) 80% or more of the total ultrafine particles in the resin are independently present;
(4) the ultrafine particles are metal ultrafine particles and/or semiconductor ultrafine particles;
(5) the ultrafine particles contain 10% by weight or more of at least one metal selected from the group consisting of gold, platinum, silver, palladium, rhodium, ruthenium, and cobalt;
(6) the semiconductor ultrafine particles are particles of at least one compound selected from the group consisting of compounds each including a group 14 element and a group 16 element in the periodic table, compounds each including a group 13 element and a group 15 element in the periodic table, compounds each including a group 13 element and a group 16 element in the periodic table, compounds each including a group 12 element and a group 16 element in the periodic table, compounds each including a group 15 element and a group 16 element in the periodic table, compounds each including a group 4 element and a group 16 element in the periodic table, and compounds each including a group 2 element and a group 16 element in the periodic table; and
(7) the resin transmits visible light.

In the resin composition containing ultrafine particles obtained in the present invention, nano-size ultrafine particles can be easily uniformly dispersed in the resin. In the present invention, the ultrafine particles can be uniformly dispersed in the resin without aggregation, thereby producing the resin composition maintaining the optical properties inherently possessed by ultrafine particles. Therefore, by using the process of the present invention, a resin composition can be obtained while maintaining the various excellent properties which should be possessed by ultrafine particles, such as thermal and mechanical properties, electric properties, magnetic properties, and others.

### Brief Description of the Drawings

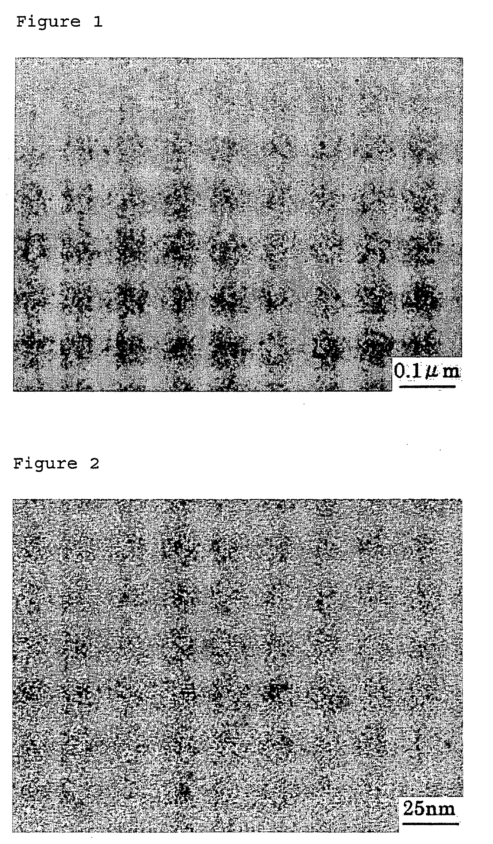

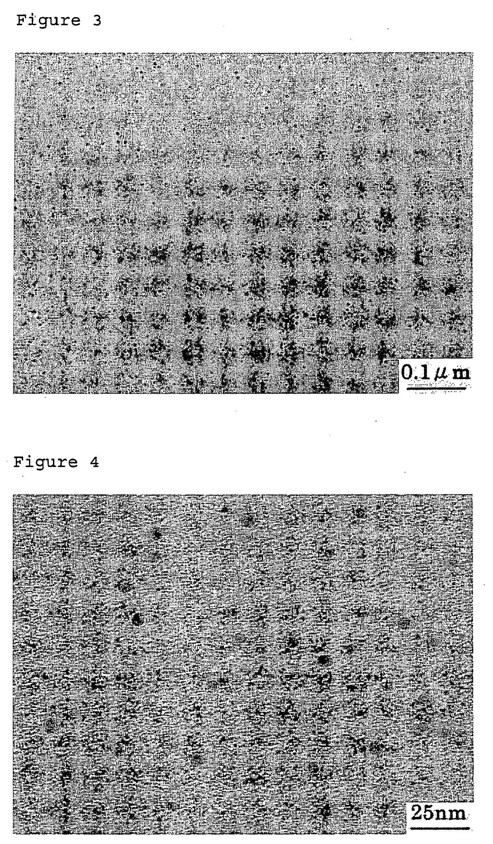

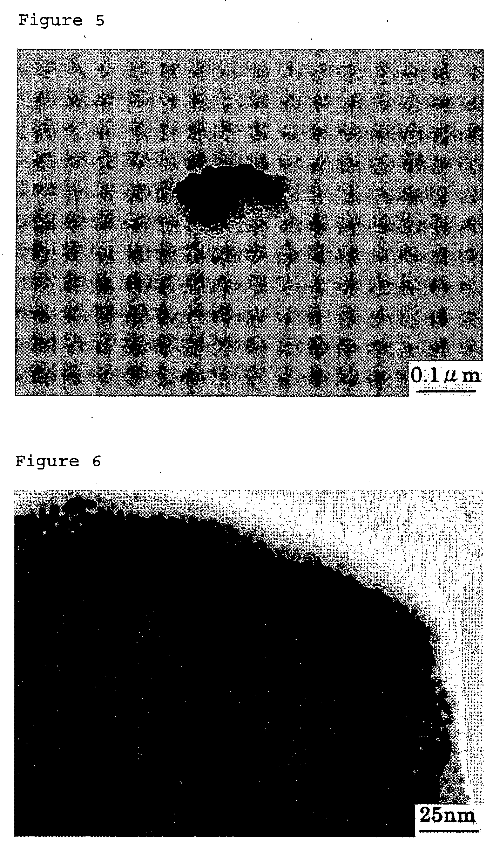

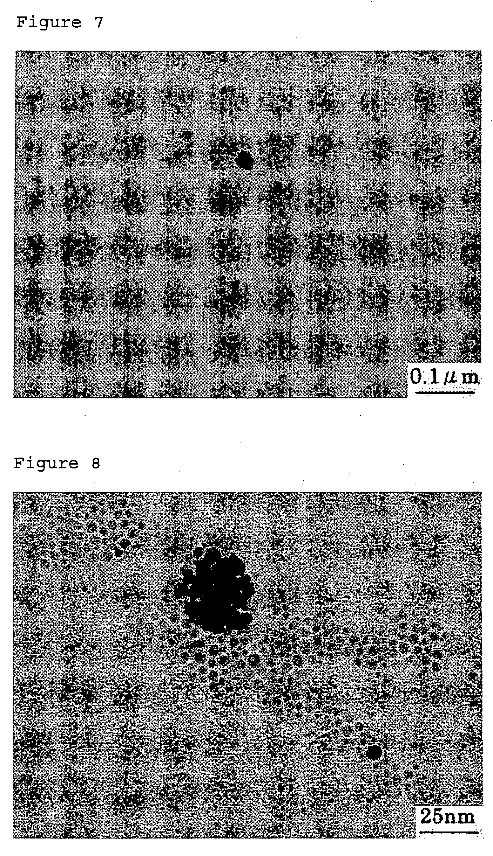

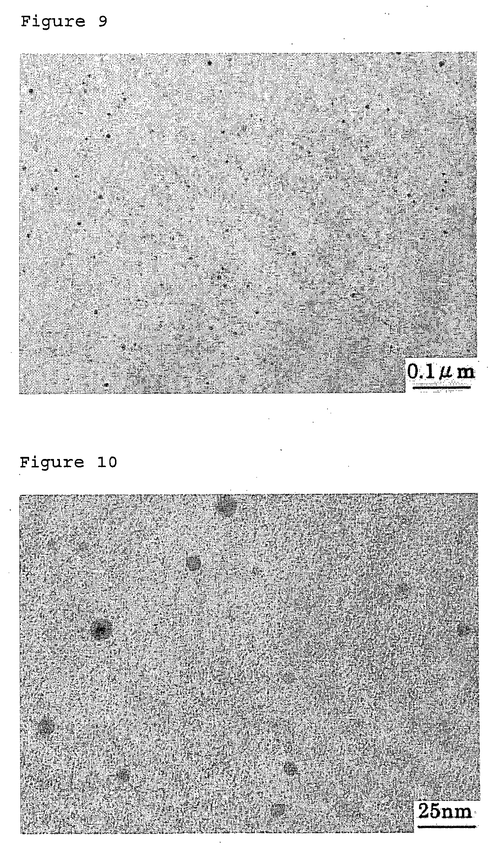

Fig. 1 is a low-magnification TEM micrograph of a resin film produced in Example 1. Fig. 2 is a high-magnification TEM micrograph of a resin film produced in Example 1. Fig. 3 is a low-magnification TEM micrograph of a resin film produced in Example 2. Fig. 4 is a high-magnification TEM micrograph of a resin film produced in Example 2. Fig. 5 is a low-magnification TEM micrograph of a resin film produced in Comparative Example 1. Fig. 6 is a high-magnification TEM micrograph of a resin film produced in Comparative Example 1. Fig. 7 is a low-magnification TEM micrograph of a resin film produced in Comparative Example 2. Fig. 8 is a high-magnification TEM micrograph of a resin film produced in Comparative Example 2. Fig. 9 is a low-magnification TEM micrograph of a resin film produced in Example 4. Fig. 10 is a high-magnification TEM micrograph of a resin film produced in Example 4.

### Best Mode for Carrying Out the Invention

A polymer containing a mercapto group at one end and used in the present invention is synthesized by reaction using reversible addition-fragmentation chain transfer (RAFT) polymerization. Namely, a radically polymerizable unsaturated monomer is radically polymerized in the presence of a compound having a thiocarbonylthio group to synthesize a polymer having a thiocarbonylthio group, and then a thiocarbonylthio group bond is cut with a treating agent to produce a mercapto group, thereby producing a polymer having a mercapto group at one end. The synthesis method will be described below.

In the present invention, the thiocarbonylthio group-containing compound is not particularly limited, but is preferably a compound represented by formula (1): 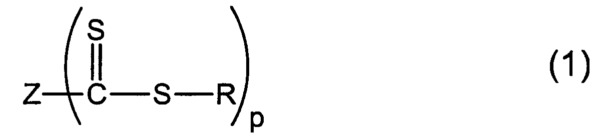 (wherein R represents a monovalent organic group having 1 or more carbon atoms; Z represents a sulfur atom (when p = 2), an oxygen atom (when p = 2), a nitrogen atom (when p = 3), or a p-valent organic group having 1 or more carbon atoms; p represents an integer of 1 or more; and when p is 2 or more, Rs may be the same or different) .

In the thiocarbonylthio group-containing compound, the monovalent organic group R having 1 or more carbon atoms is not particularly limited and may contain at least one of a hydrogen atom, a nitrogen atom, an oxygen atom, a sulfur atom, a halogen atom, a silicon atom, a phosphorus atom, and a metal atom in addition to a carbon atom. Alternatively, R may be a polymer. Examples of R include alkyl, aralkyl and substituted groups thereof. From the viewpoint of availability and polymerization activity, R preferably has any one of structures represented by formulae (2) and (3): 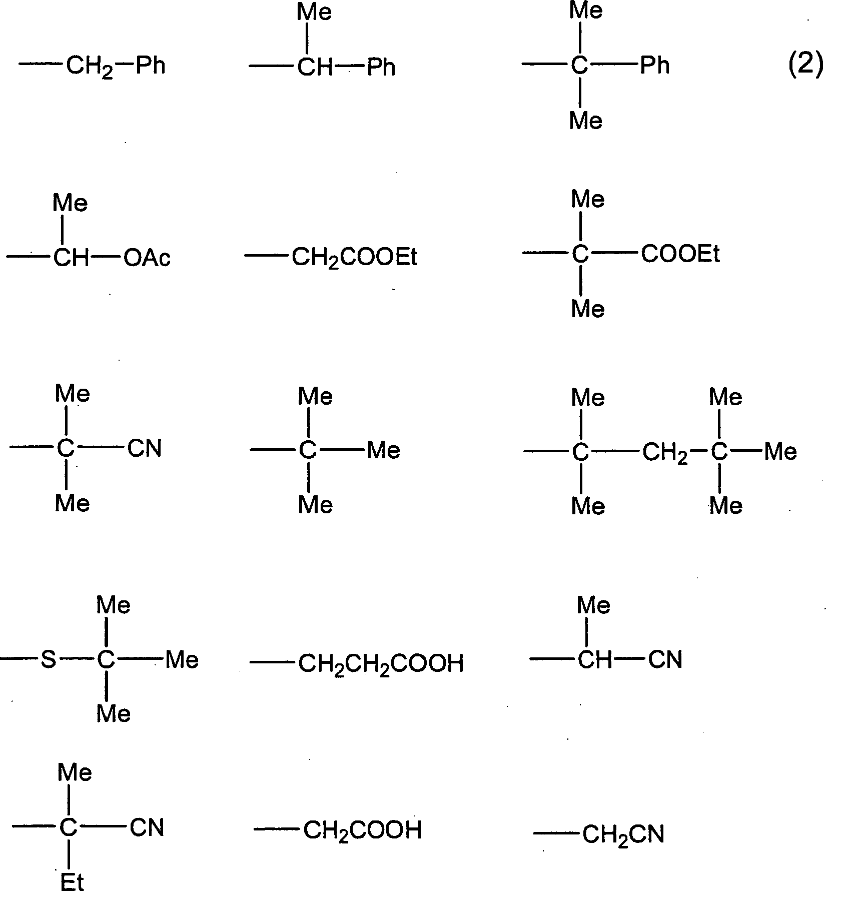 (wherein Me denotes a methyl group, Et denotes an ethyl group, Ph denotes a phenyl group, and Ac denotes an acetyl group); and 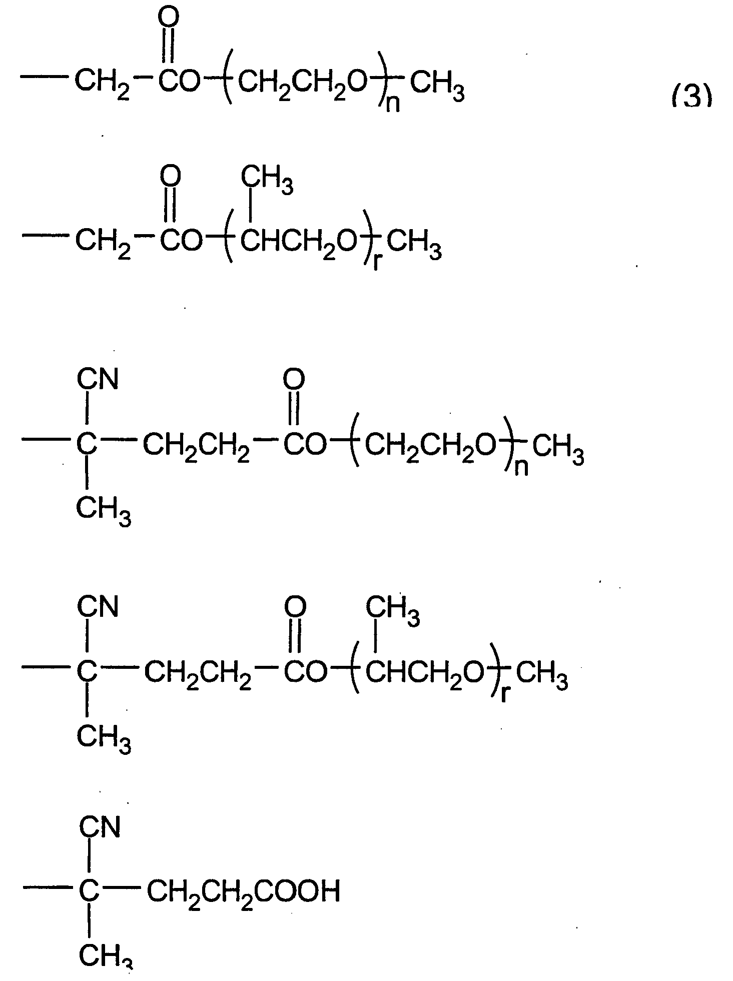 (wherein n represents an integer of 1 or more, and r represents an integer of 0 or more).

In these formulae, in view of availability, n and r are each preferably 500 or less, more preferably 200 or less, and further preferably 100 or less. In particular, from the viewpoint of availability and polymerization activity, R is preferably a group having 2 to 30 carbon atoms.

When Z in the thiocarbonylthio group-containing compound is a p-valent organic group having 1 or more carbon atoms, the structure of Z is not particularly limited, and Z may contain at least one of a hydrogen atom, a nitrogen atom, an oxygen atom, a sulfur atom, a halogen atom, a silicon atom, and a phosphorus atom in addition to a carbon atom. Alternatively, Z may be a polymer. When p = 1, examples of Z include alkyl, aralkyl, aryl, amino, thioaryl, alkoxy, and sulfide, and substituted groups thereof. In view of availability and polymerization activity, alkyl having 1 to 20 carbon atoms, substituted alkyl having 1 to 20 carbon atoms, aryl having 6 to 30 carbon atoms, substituted aryl having 6 to 30 carbon atoms, aralkyl having 7 to 30 carbon atoms, substituted aralkyl having 7 to 30 carbon atoms, N-alkyl-N-arylamino having 7 to 30 carbon atoms, N,N-diarylamino having 12 to 30 carbon atoms, thioaryl having 6 to 30 carbon atoms, and alkoxy having 1 to 20 carbon atoms are preferred. In view of availability and polymerization activity, groups having structures represented by formulae (4) and (5) are more preferred: 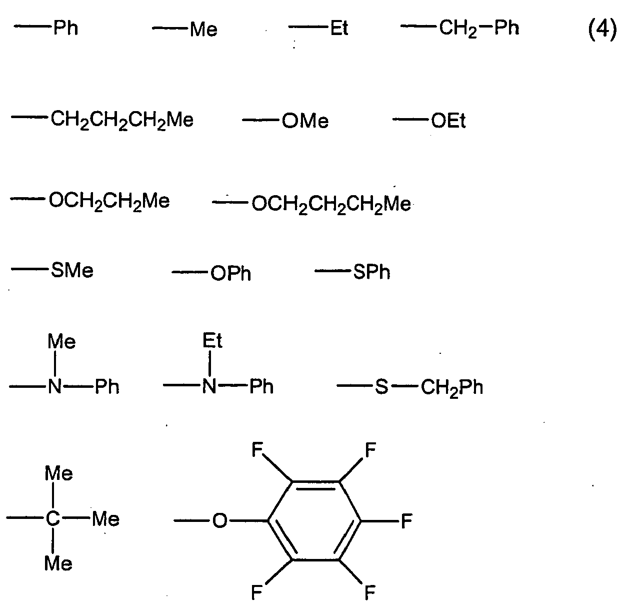 (wherein Me denotes a methyl group, Et denotes an ethyl group, and Ph denotes a phenyl group); and 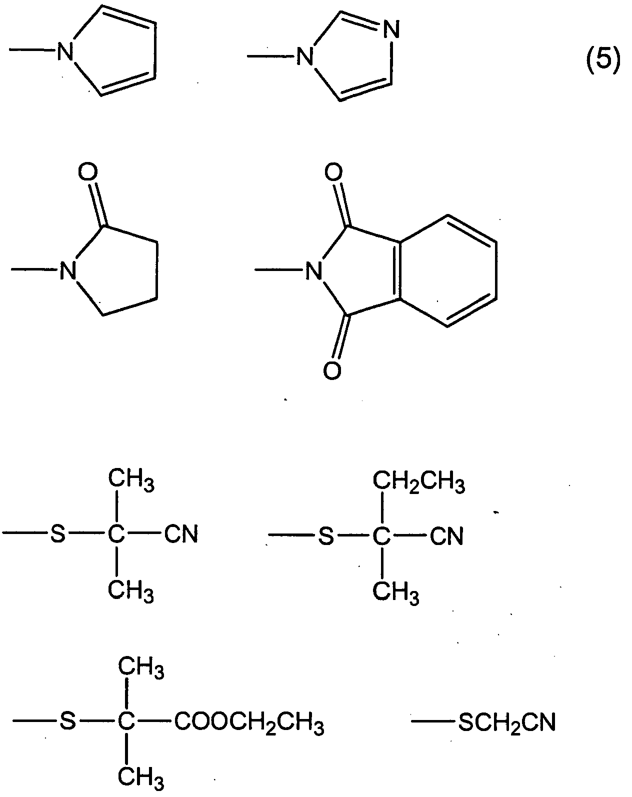 When p = 2, in view of availability and polymerization activity, structures represented by formula (6) are further preferred: 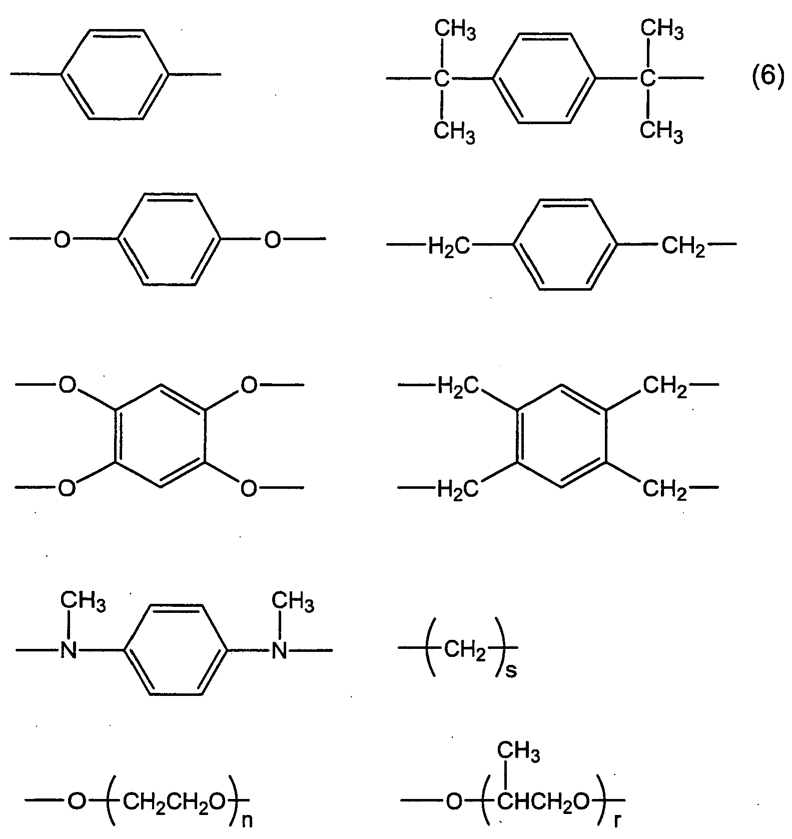 (wherein n represents an integer of 1 or more, r represents an integer of 0 or more, and s represents an integer of 1 or more). In these formulae, n and r are each preferably 500 or less, more preferably 200 or less, and further preferably 100 or less; and s is preferably in a range of 1 to 30 and more preferably a range of 1 to 10. In view of availability and polymerization activity, Z particularly preferably has an aromatic ring structure having 6 to 20 carbon atoms.

In the thiocarbonylthio group-containing compound, p is preferably 1 or 2 and more preferably 1 from the viewpoint of availability.

Examples of the thiocarbonyl compound include, but are not limited to, compounds represented by formulae (7) to (10): 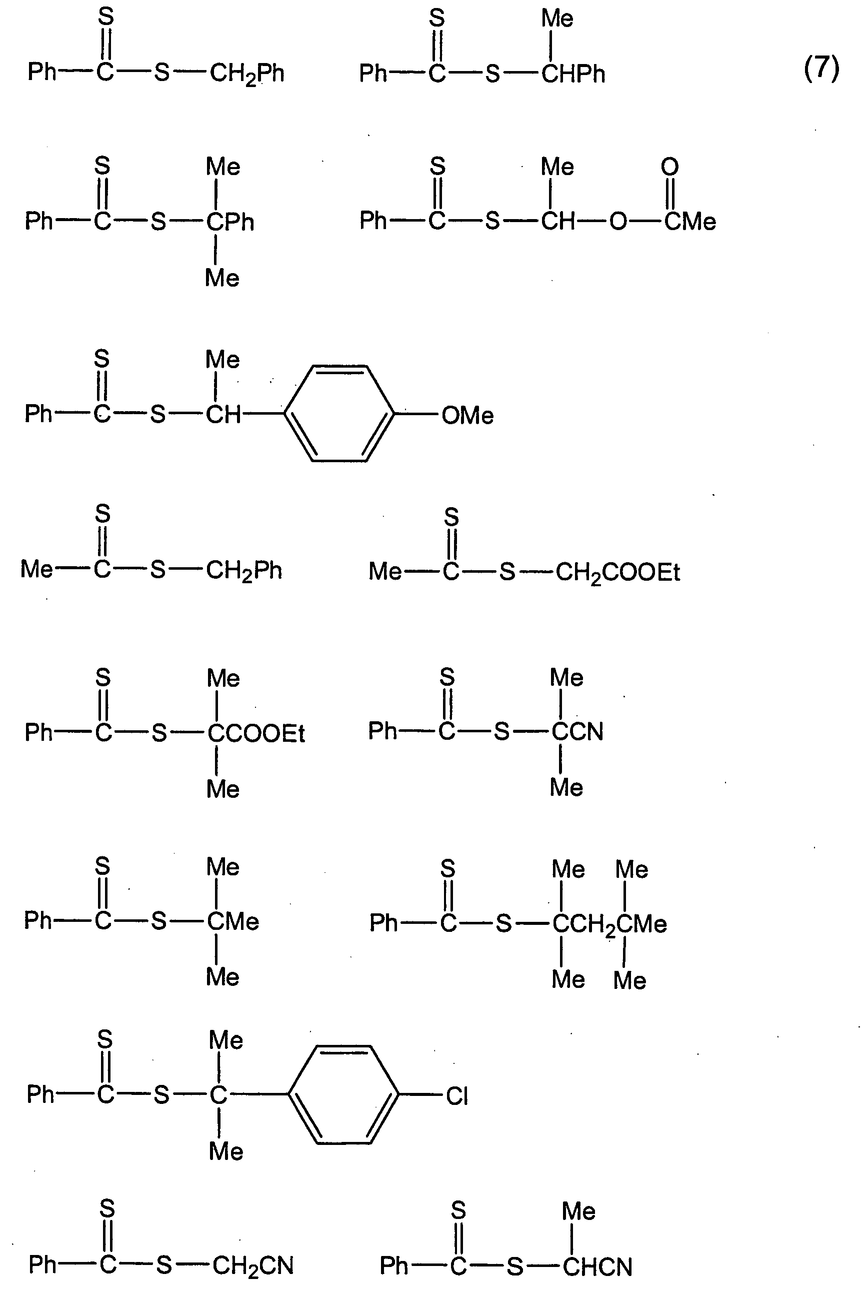 (wherein Me denotes a methyl group, Et denotes an ethyl group, and Ph denotes a phenyl group); 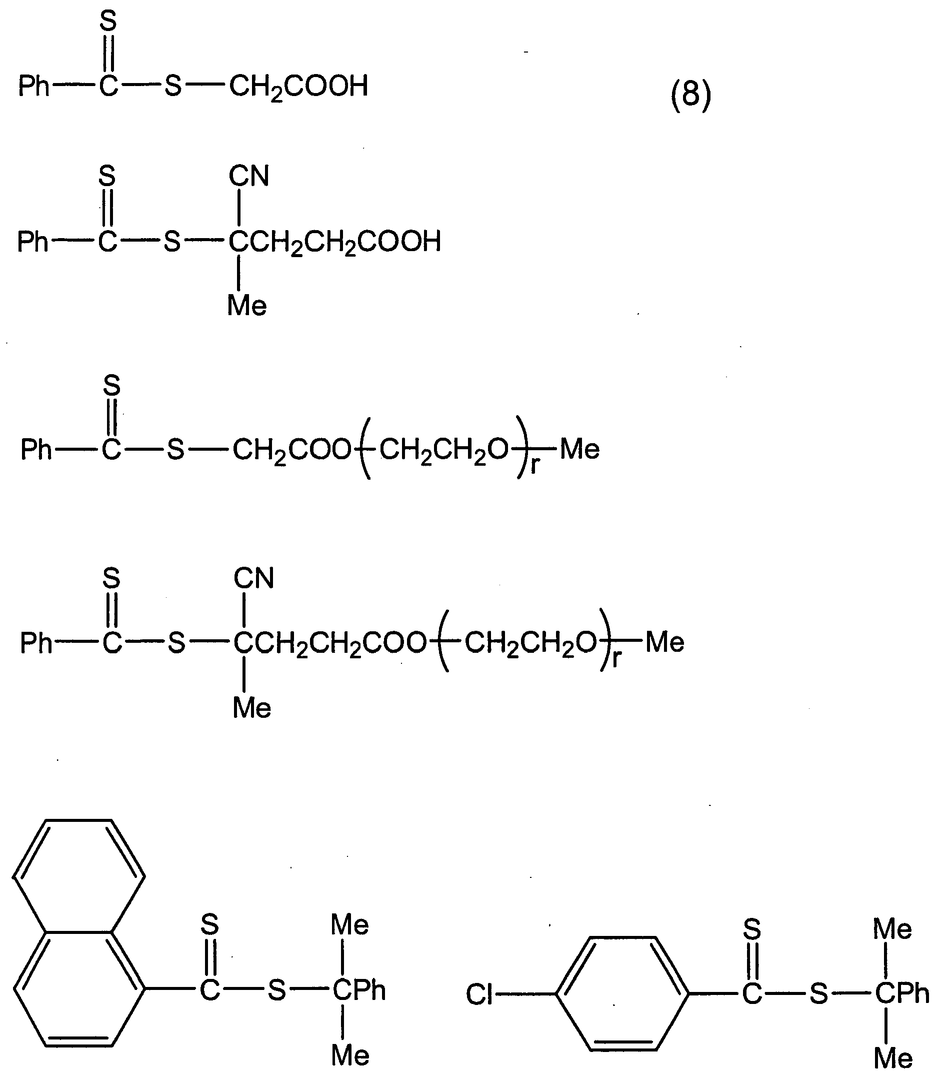 (wherein Me denotes a methyl group, Ph denotes a phenyl group, and r is an integer of 0 or more); 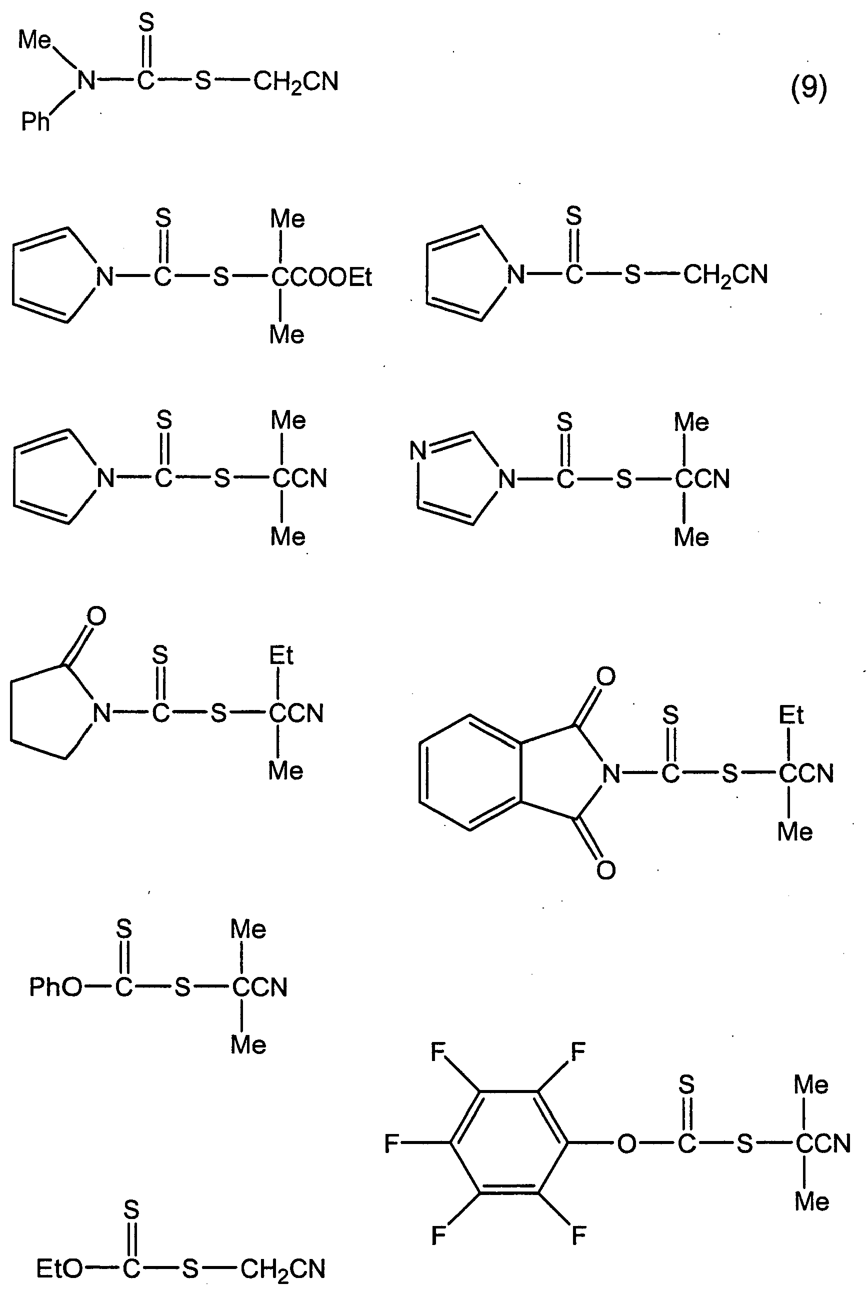 (wherein Me denotes a methyl group, Et denotes an ethyl group, and Ph denotes a phenyl group); and 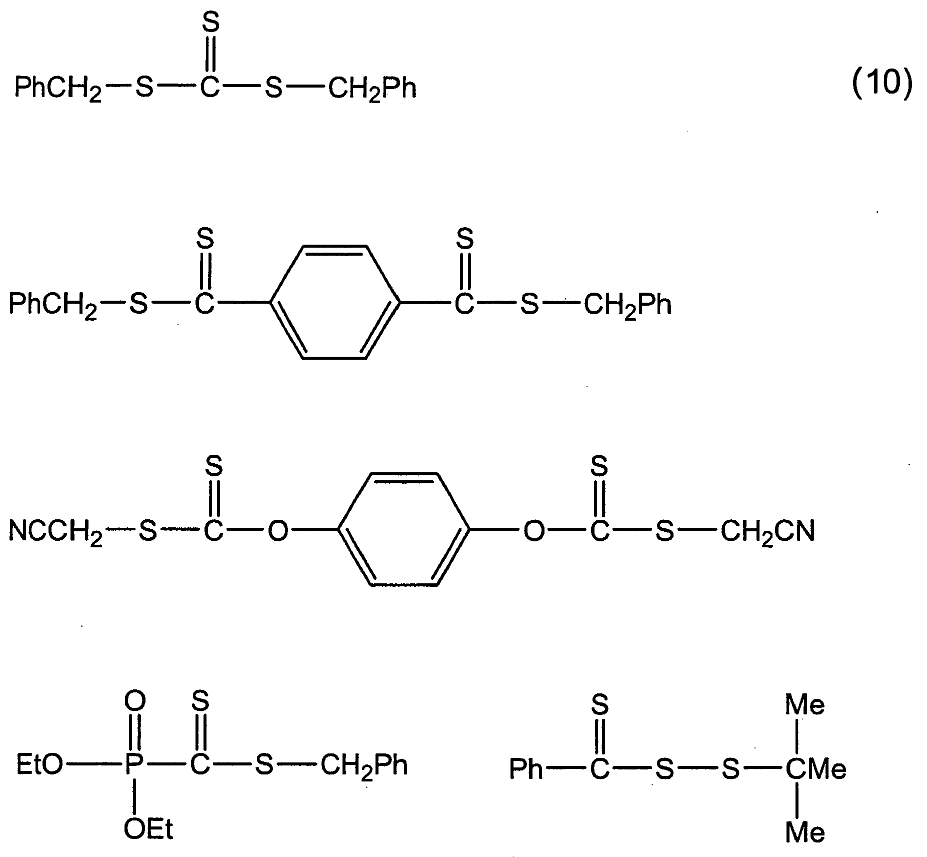 (wherein Me denotes a methyl group, Et denotes an ethyl group, and Ph denotes a phenyl group).

For the thiocarbonylthio group-containing compound, the optimum structure can be selected according to the type of the unsaturated monomer to be polymerized. For example, in polymerization of an acrylic monomer such as acrylate, methacrylate, acrylic acid, methacrylic acid, acrylamide, methacrylamide, acrylonitrile, or methacrylonitrile, or a styrene monomer such as styrene or α-methylstyrene, from the viewpoint of availability and polymerization activity, compounds represented by formula (11) are preferred: 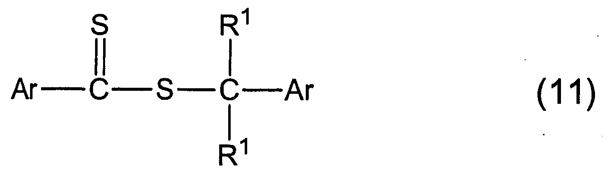 (wherein Ar represents a monovalent aromatic group; R¹ represents a hydrogen atom, a cyano group, or a monovalent alkyl group; Ars may be the same or different; and R¹s may be the same or different). Ar is more preferably a phenyl group, and R¹ is more preferably a hydrogen atom, a cyano group, or an alkyl group having 6 or less carbon atoms.

When the monomer polymerized is a vinyl ester monomer such as vinyl acetate or vinyl propionate, from the viewpoint of availability and polymerization activity, a xanthate compound or a dithiocarbamate compound is preferred, and a compound represented by formula (12) is more preferred. 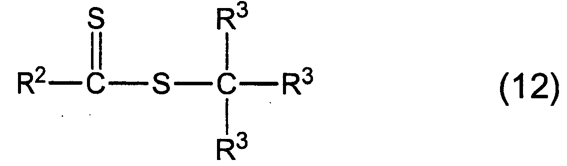 (wherein R² represents N,N-dialkylamino, N,N-diarylamino, N-alkyl-N-arylamino, or a nitrogen-containing heterocyclic ring bonded through a nitrogen atom; R³ represents a hydrogen atom, cyano, alkyl having 10 or less carbon atoms, or aryl having 20 or less carbon atoms; and R³s may be the same or different).

In the present invention, examples of the monomer to be polymerized include, but are not limited to, acrylate monomers, methacrylate monomers, acrylic acid and methacrylic acid and metal salts thereof, styrene monomers, vinyl cyanide monomers, conjugated diene monomers, halogen-containing vinyl monomers, vinyl ester monomers, unsaturated dicarboxylic acid compounds and derivatives thereof, and maleimide compounds.

Examples of acrylate monomers include methyl acrylate, ethyl acrylate, n-propyl acrylate, isopropyl acrylate, n-butyl acrylate, tert-butyl acrylate, n-hexyl acrylate, 2-ethylhexyl acrylate, n-octyl acrylate, n-decyl acrylate, n-dodecyl acrylate, tridecyl acrylate, stearyl acrylate, cyclohexyl acrylate, phenyl acrylate, benzyl acrylate, 2-methoxyethyl acrylate, 3-methoxybutyl acrylate, 2-hydroxyethyl acrylate, 2-hydroxypropyl acrylate, glycidyl acrylate, 3-acryloyloxypropyl dimethoxymethylsilane, 3-acryloyloxypropyl trimethoxysilane, 2,2,2-trifluoroethyl acrylate, and allyl acrylate.

Examples of methacrylate monomers include methyl methacrylate, ethyl methacrylate, n-propyl methacrylate, isopropyl methacrylate, n-butyl methacrylate, tert-butyl methacrylate, n-hexyl methacrylate, 2-ethylhexyl methacrylate, n-octyl methacrylate, n-decyl methacrylate, n-dodecyl methacrylate, tridecyl methacrylate, stearyl methacrylate, cyclohexyl methacrylate, phenyl methacrylate, benzyl methacrylate, 2-methoxyethyl methacrylate, 3-methoxybutyl methacrylate, 2-hydroxyethyl methacrylate, 2-hydroxypropyl methacrylate, glycidyl methacrylate, 3-methacryloyloxypropyl dimethoxymethylsilane, 3-methacryloyloxypropyl trimethoxysilane, 2,2,2-trifluoroethyl methacrylate, allyl methacrylate, and the like.

Examples of acrylic acid, methacrylic acid and metal salts thereof include acrylic acid, methacrylic acid, sodium acrylate, potassium acrylate, sodium methacrylate, potassium methacrylate, and the like.

Examples of styrene monomers include styrene, α-methylstyrene, p-methylstyrene, p-methoxystyrene, indene, and the like.

Examples of vinyl cyanide monomers include acrylonitrile, methacrylonitrile, and the like.

Examples of amide monomers include acrylamide, methacrylamide, and the like.

Examples of conjugated diene monomers include butadiene, isoprene, chloroprene, and the like.

Examples of halogen-containing vinyl monomers include vinyl chloride, vinylidene chloride, tetrafluoroethylene, hexafluoropropylene, vinylidene fluoride, and the like.

Examples of vinyl ester monomers include vinyl acetate, vinyl propionate, vinyl pivalate, vinyl benzoate, vinyl cinnamate, and the like.

Examples of unsaturated dicarboxylic acid compounds and derivatives thereof include maleic anhydride, maleic acid, maleic acid monoesters, maleic acid diesters, fumaric acid, fumaric acid monoesters, fumaric acid diesters, and the like.

Examples of maleimide compounds include maleimide, methylmaleimide, ethylmaleimide, phenylmaleimide, cyclohexylmaleimide, and the like.

These monomers may be used alone or in combination of two or more. When a combination of a plurality of monomers is copolymerized, the type of the copolymer produced is not particularly limited. Examples of the copolymer include random copolymers, block copolymers, graft copolymers, gradient copolymers, and the like. The monomer used may be selected according to the required characteristics of the resin composition and the polymer-modified ultrafine particles produced by finally coating ultrafine particles. For example, when the polymer-modified ultrafine particles are dispersed in a nonpolar resin, preferred are acrylonitrile, methacrylonitrile, acrylates, methacrylate, styrene, and the like. For the purpose of dispersing in a watersoluble resin, preferred are acrylic acid, methacrylic acid, acrylic acid metal salts, methacrylic acid metal salts, acrylamide, methacrylamide, hydroxyl group-containing acrylic acid, hydroxyl group-containing methacrylic acid, vinyl ester monomers, and the like. In this case, acrylic acid, methacrylic acid, acrylamide, methacrylamide, 2-hydroxyethyl acrylate, 2-hdyroxyethyl methacrylate, and vinyl acetate are more preferred from the viewpoint of availability.

The type of the RAFT polymerization method used in the present invention is not particularly limited. For example, bulk polymerization, solution polymerization, emulsion polymerization, suspension polymerization, fine suspension polymerization, and the like can be used. Except in the bulk polymerization, the medium (solvent) used is not particularly limited, and any of solvents generally used for radical polymerization can be used. In view of availability and easy polymerization, water, toluene, ethyl acetate, butyl acetate, dimethylformamide, methyl ethyl ketone, and ethanol are preferred.

The RAFT polymerization may be performed by a general known method, but a typical usable method is as follows: The thiocarbonylthio group-containing compound, a polymerization initiator, a radically polymerizable unsaturated monomer, and, if required, a medium (solvent) are charged in a reactor, and oxygen in the system is removed by an ordinary method, followed by heating and stirring in an inert gas atmosphere. The RAFT polymerization is characterized in that a polymer having a desired molecular weight can be obtained because the molecular weight of the resultant polymer depends on the charge ratio of the monomer to the thiocarbonylthio group-containing compound and the reaction rate of the monomer.

The polymerization initiator used is not particularly limited, and any compound or method generally used for radical polymerization can be used. Examples of compounds generally used in radical polymerization include peroxide polymerization initiators, azo polymerization initiators, inorganic peroxides, vinyl monomers capable of thermally generating radicals, compounds capable of optically generating radicals, redox polymerization initiators, and the like. Specific examples of the peroxide polymerization initiators include isobutyl peroxide, α,α'-bis(neodecanoylperoxy) diisopropylbenzene, cumylperoxy neodecanoate, di-n-propylperoxy dicarbonate, diisopropylperoxy dicarbonate, di-sec-butylperoxy dicarbonate, 1,1,3,3-tetramethylbutylperoxy neodecanoate, bis(4-tert-butylcyclohexyl)peroxy dicarbonate, 1-cyclohexyl-1-methylethylperoxy neodecanoate, di-2-ethoxyethylperoxy dicarbonate, di(2-ethylhexylperoxy) dicarbonate, tert-hexylperoxy neodecanoate, dimethoxybutylperoxy dicarbonate, tert-butylperoxy neodecanoate, tert-hexylperoxy pivalate, tert-butylperoxy pivalate, 3,3,5-trimethylhexanoyl peroxide, octanoyl peroxide, lauroyl peroxide, stearoyl peroxide, 1, 1, 3, 3-tetramethylbutylperoxy-2-ethyl hexanoate, succinic peroxide, 2,5-dimethyl-2,5-di(2-ethylhexanoylperoxy)hexane, tert-hexylperoxy-2-ethyl hexanoate, 4-methylbenzoyl peroxide, tert-butylperoxy-2-ethyl hexanoate, benzoyl peroxide, tert-butylperoxy isobutylate, 1,1-bis(tert-butylperoxy) 2-methyl cyclohexane, 1,1-bis(tert-hexylperoxy)-3,3,5-trimethylcyclohexane, 1,1-bis(tert-hexylperoxy)cyclohexane, 1,1-bis(tert-butylperoxy)-3,3,5-trimethylcyclohexane, 1,1-bis(tert-butylperoxy)cyclohexane, 2,2-bis(4,4-di-butylperoxycyclohexyl)propane, tert-hexylperoxyisopropyl monocarbonate, tert-butylperoxy maleic acid, tert-butylperoxy-3,5,5-trimethyl hexanoate, tert-butylperoxy laurate, 2,5-dimethyl-2,5-di(m-toluoylperoxy)hexane, tert-butylperoxyisopropyl monocarbonate, tert-butylperoxy 2-ethylhexyl monocarbonate, tert-hexylperoxy benzoate, 2,5-dimethyl-2,5-di(benzoylperoxy)hexane, tert-butylperoxy acetate, 2,2-bis(tert-butylperoxy)butane, tert-butylperoxy benzoate, n-butyl-4,4-bis(tert-butylperoxy) valerate, di-tert-butylperoxy isophthalate, α,α'-bis(tert-butylperoxy)diisopropylbenzene, dicumyl peroxide, 2,5-dimethyl-2,5-di(tert-butylperoxy)hexane, tert-butylcumyl peroxide, di-tert-butyl peroxide, p-methane hydroperoxide, 2,5-dimethyl-2,5-di(tert-butylperoxy)hexyne-3, diisopropylbenzene hydroperoxide, tert-butyltrimethylsilyl peroxide, 1,1,3,3-tetramethylbutyl hydroperoxide, cumene hydroperoxide, and tert-butyl hydroperoxide.

Examples of the azo polymerization initiators include 2,2'-azobis(4-methoxy-2,4-dimethylvaleronitrile), 2,2'-azobis(2,4-dimethylvaleronitrile), 2,2'-azobisisobutyronitrile, 2,2'-azobis(2-methylbutyronitrile), 1,1'-azobis(cyclohexane-1-carbonitrile), 2-(carbamoylazo)isobutyronitrile, 2,2'-azobis(2-methyl-N-phenylpropionamidine) dihydrochloride, 2,2'-azobis[N-(4-chlorophenyl)-2-methylpropionamidine] dihydrochloride, 2,2'-azobis[N-(4-hydroxyphenyl)-2-methylpropionamidine] dihydrochloride, 2,2'-azobis[2-methyl-N-(phenylmethyl)propionamidine] dihydrochloride, 2,2'-azobis[2-(N-allylamidino)propane] dihydrochloride, 2,2'-azobis[2-(5-methyl-2-imidazolin-2-yl)propane] dihydrochloride, 2,2'-azobis[2-(2-imidazolin-2-yl)propane] dihydrochloride, 2,2'-azobis[2-(4,5,6,7-tetrahydro-1H-1,3-diazepin-2-yl)propane] dihydrochloride, 2,2'-azobis{2-methyl -N-[1,1-bis(hydroxymethyl)-2-hydroxyethyl] propionamide}, 2,2'-azobis{2-methyl-N-[1,1-bis(hydroxymethyl)ethyl]propionamide}, 2,2'-azobis(isobutylamide) dihydrate, 2,2'-azobis (2,4,4-trimethylpentane), dimethyl 2,2'-azobisisobutylate, and 4,4'-azobis(4-cyanovaleric acid).

Examples of the inorganic peroxides include potassium persulfate and sodium persulfate.

Examples of the vinyl monomers capable of thermally generating radicals include styrene.

Examples of the compounds capable of optically generating radicals include benzoin derivatives, benzophenone, acylphosphine oxides, and photoredox compounds.

Examples of the redox polymerization initiators include reducing agents such as sodium sulfite, sodium thiosulfate, sodium formaldehyde sulfoxylate, ascorbic acid, and ferrous sulfate; and oxidizing agents such as potassium peroxodisulfate, hydrogen peroxide, and tert-butyl hydroperoxide. These polymerization initiators may be used alone or in combination of two or more. A general method used for radical polymerization may use a polymerization initiation system using electron beam irradiation, X-ray irradiation, radiation irradiation, or the like.

Although the amount of the polymerization initiator used in the present invention is not particularly limited, the amount of radical species produced in polymerization is preferably 1 mol or less, more preferably 0.5 mol or less, and further preferably 0.3 mol or less per mol of the thiocarbonylthio group of the thiocarbonylthio group-containing compound from the viewpoint of a higher rate of terminal functionalization of a mercapto group.

In the present invention, the thiocarbonylthio group-containing polymer produced by the RAFT polymerization is treated with a treating agent to produce a polymer having a mercapto group at one end. The treating agent is not particularly limited, but a base, an acid, or a hydrogen-nitrogen bond-containing compound is preferred from the viewpoint of high reaction efficiency.

Specific examples of the base among the above-described treating agents include, but are not limited to, metal hydroxides, such as sodium hydroxide, potassium hydroxide, calcium hydroxide, magnesium hydroxide, aluminum hydroxide, and zinc hydroxide; metal alkoxides, such as sodium methoxide, sodium ethoxide, sodium phenoxide, and magnesium methoxide; metal hydrides, such as sodium hydride, lithium hydride, calcium hydride, lithium aluminum hydride, and sodium borohydride; salts of strong bases with weak acids, such as sodium carbonate, potassium carbonate, sodium acetate, and potassium acetate; organic metal reagents, such as hydrosulfite, n-butyllithium, tert-butyllithium, ethylmagnesium bromide, and phenylmagnesium bromide; and tertiary amine compounds, such as triethylamine and tri-n-butylamine. Other usable examples include alkali metals, such as metallic lithium, metallic sodium, and metallic potassium; and alkaline earth metals, such as metallic magnesium and metallic calcium. These compounds may be used alone or in combination of two or more.

Specific examples of the acid among the treating agents include, but are not limited to, inorganic acids, such as hydrochloric acid, nitric acid, sulfuric acid, phosphoric acid, hydrofluoric acid, hydroborofluoric acid, and chlorosulfonic acid; organic acids, such as p-toluenesulfonic acid, trifluoromethanesulfonic acid, acetic acid, trifluoroacetic acid, methylphosphoric acid, stearylphosphoric acid, dimethyldithiophosphoric acid, diethyldithiophosphoric acid, and phenylphosphonic acid; and ion-exchange resins. Other usable examples include acid anhydrides, such as acetic anhydride, propionic anhydride, trifluoroacetic anhydride, phthalic anhydride, and succinic anhydride; acyl halides, such as acetyl chloride and benzoyl chloride; metal halides, such as titanium tetrachloride, aluminum chloride, and silicon chloride; and compounds exhibiting acidity by reaction with moisture, such as thionyl chloride. These compounds may be used alone or in combination of two or more.

Specific examples of the hydrogen-nitrogen bond-containing compound among the treating agents include, but are not limited to, ammonia, hydrazine, primary amine compounds, secondary amine compounds, amide compounds, amine hydrochloride compounds, hydrogen-nitrogen bond-containing polymers, and hindered amine light stabilizers (HALS).

Specific examples of the primary amine compounds among the hydrogen-nitrogen bond-containing compounds include 3-amino-1-propanol, allylamine, isopropylamine, monoethylamine, 2-ethylhexylamine, n-butylamine, tert-butylamine, n-propylamine, 3-methoxypropylamine, 2-aminoethanol, ethylenediamine, diethylenetriamine, triethylenetetramine, 1,4-diaminobutane, 1,2-diaminopropane, 1,3-diaminopropane, diaminomaleonitrile, cyclohexylamine, hexamethylenediamine, n-hexylamine, monomethylamine, monomethylhydrazine, anisidine, aniline, ethyl p-aminobenzoate, aminophenol, toluidine, phenylhydrazine, phenylenediamine, phenethylamine, benzylamine, mesidine, aminopyridine, and melamine.

Specific examples of the secondary amine compounds among the hydrogen-nitrogen bond-containing compounds include diallylamine, diisopropylamine, diethylamine, diisobutylamine, di-2-ethylhexylamine, bis(hydroxyethyl)amine, N-ethylethylenediamine, ethyleneimine, dicyclohexylamine, di-n-butylamine, di-tert-butylamine, dimethylamine, N-ethylaniline, diphenylamine, dibenzylamine, N-methylaniline, imidazole, 2,5-dimethylpiperazine, piperazine, piperidine, pyrrolidine, and morpholine.

Specific examples of the amide compounds among the hydrogen-nitrogen bond-containing compounds include adipic acid dihydrazide, N-isopropylacrylamide, carbohydrazide, guanylthiourea, glycylglycine, oleic acid amide, stearic acid amide, adipic acid dihydrazide, formamide, methacrylamide, acetanilide, acetoacetic acid anilide, acetoacetic acid toluidide, toluenesulfonamide, phthalimide, isocyanuric acid, succinic acid imide, hydantoin, phenylpyrazolidone, benzamide, acetamide, acrylamide, propionic acid amide, and 2,2,2-trifluoroacetamide.

Specific examples of amine hydrochloride compounds among the hydrogen-nitrogen bond-containing compounds include acetamidine hydrochloride, monomethylamine hydrochloride, dimethylamine hydrochloride, monoethylamine hydrochloride, diethylamine hydrochloride, monopropylamine hydrochloride, dipropylamine hydrochloride, semicarbazide hydrochloride, guanidine hydrochloride, and cysteamine hydrochloride.

Specific examples of the hydrogen-nitrogen bond-containing polymers among the hydrogen-nitrogen bond-containing compounds include Polyment (trade name) (manufactured by Nippon Shokubai Co., Ltd.), polyethyleneimine, aminopolyacrylamide, nylon 6, nylon 66, nylon 610, nylon 612, nylon 11, nylon 12, nylon MXD6, nylon 46, polyamide-imide, polyallylamine, and polyurethane.

Specific examples of the hindered amine light stabilizes (HALS) among the hydrogen-nitrogen bond-containing compounds include, but are not limited to, trade name, Adecastab LA-77 (manufactured by Asahi Denka Kogyo Co., Ltd.), trade name, Chimassorb 944LD (manufactured by Ciba Specialty Chemicals Inc.), trade name, Tinuvin 144 (manufactured by Ciba Specialty Chemicals Inc.), trade name, Adecastab LA-57 (manufactured by Asahi Denka Kogyo Co., Ltd.), trade name, Adecastab LA-67 (manufactured by Asahi Denka Kogyo Co., Ltd.), trade name, Adecastab LA-68 (manufactured by Asahi Denka Kogyo Co., Ltd.), trade name, Adecastab LA-87 (manufactured by Asahi Denka Kogyo Co., Ltd.), and trade name, Goodrite UV-3034 (manufactured by Goodrich Chemical Co.).

Among these treating agents, the bases and the hydrogen-nitrogen bond-containing compounds are preferred from the viewpoint of high reaction efficiency, the hydrogen-nitrogen bond-containing compounds are more preferred from the viewpoint of ease of handling, and monomethylamine, monoethylamine, dimethylamine, diethylamine, monobutylamine, dibutylamine, and cyclohexylamine are further preferred from the viewpoint of availability and ease of recovery and removal.

When ultrafine particles are produced using the reducing agent, as described below, the reducing agent also functions as the treating agent for converting a thiocarbonylthio group to a mercapto group. Therefore, the production of the ultrafine particles, preparation of a mercapto group-containing polymer, and modification of the ultrafine particles with the mercapto group-containing polymer can be simultaneously performed.

The amount of the treating agent used is not particularly limited. When a base or acid is used as the treating agent, from the viewpoint of ease of handling and reactivity, the treating agent used is preferably 0.01 to 100 parts by weight, more preferably 0.05 to 50 parts by weight, and particularly preferably 0.1 to 30 parts by weight relative to 100 parts by weight of the thiocarbonylthio group-containing polymer. When a hydrogen-nitrogen bond-containing compound is used as the treating agent, the amount of the hydrogen-nitrogen bond-containing compound used is preferably 0.5 to 1000 mol and more preferably 1 to 500 mol per mol of the thiocarbonylthio groups of the polymer.

The molecular weight of the polymer having a mercapto group at one end cannot be specified because a preferred range varies depending on the type of the ultrafine particles used, the particle size, the type of the resin used, the amount of the particles added, etc. However, from the viewpoint of easy progress of polymerization reaction, the ability to securely leave a mercapto group at one end, and the like, the number-average molecular weight is preferably in a range of about 100 to 1,000,000, more preferably in a range of 500 to 400,000, and most preferably in a range of 2,000 to 200,000.

Since the polymer having a mercapto group at one end is produced by reversible addition-fragmentation chain transfer (RAFT) polymerization, the molecular weight distribution (weight-average molecular weight/number-average molecular weight) is generally very narrow, and, for example, about 2.0 or less and generally about 1.3 or less. In the present invention, in view of uniform dispersibility and ease of handling, the molecular weight distribution of the polymer having a mercapto group at one end is preferably 2 or less and more preferably 1.5 or less.

Examples of metal ultrafine particles among the ultrafine particles used in the present invention include particles of elemental metals, such as gold, silver, copper, zinc, cadmium, gallium, indium, silicon, germanium, tin, palladium, iron, cobalt, nickel, ruthenium, rhodium, osmium, iridium, platinum, vanadium, chromium, manganese, yttrium, zirconium, niobium, molybdenum, calcium, strontium, barium, antimony, and bismuth; and alloys thereof, such as iron-platinum. The ultrafine particles may be composite ultrafine particles including other various types of ultrafine particles having metal-coated surfaces. Among these ultrafine particles, ultrafine particles containing 10% by weight or more of at least one selected from the group consisting of gold, platinum, silver, palladium, rhodium, ruthenium, and cobalt are preferred because the low oxidizability of the surfaces can facilitate the formation of bonds between the ultrafine particle surfaces and the polymer having a mercapto group at one end. A form including the above-described metal may be an alloy or other ultrafine particles coated with a metal. In particular, ultrafine particles containing 10% by weight or more of gold or platinum are preferred, and ultrafine particles of gold, platinum, or iron-platinum are most preferred. When iron-platinum ultrafine particles are used, the iron/platinum ratio by weight is preferably 20/80 to 80/20 and more preferably 30/70 to 70/30. Within this range, the ultrafine particles having a high antioxidative force at the particle surfaces and excellent magnetic properties can be preferably obtained.

Examples of the semiconductor ultrafine particles among the ultrafine particles used in the present invention include particles of group 14 elements in the periodic table, such as C, Si, Ge, and Sn; group 15 elements in the periodic table, such as P (black phosphorus); group 16 elements in the periodic table, such as Se and Te; compounds each including a plurality of group 14 elements in the periodic table, such as SiC; compounds each including a group 14 element and group 16 element in the periodic table, such as SnO₂, Sn(II)Sn(IV)S₃, SnS₂, SnS, SnSe, SnTe, PbS, PbSe, and PbTe; compounds each including a group 13 element and group 15 element in the periodic table, such as BN, BP, BAs, AlN, AlP, AlAs, AlSb, GaN, GaP, GaAs, GaSb, InN, InP, InAs, and InSb; compounds each including a group 13 element and group 16 element in the periodic table, such as Al₂S₃, Al₂Se₃, Ga₂O₃, Ga₂S₃, Ga₂Se₃, Ga₂Te₃, In₂O₃, In₂S₃, In₂Se₃, and In₂Te₃; compounds each including a group 13 element and group 17 element in the periodic table, such as TlCl, TlBr, and TlI; compounds each including a group 12 element and group 16 element in the periodic table, such as ZnO, ZnS, ZnSe, ZnTe, CdO, CdS, CdSe, CdTe, HgO, HgS, HgSe, and HgTe; compounds each including a group 15 element and group 16 element in the periodic table, such as As₂O₃, As₂S₃, As₂Se₃, As₂Te₃, Sb₂O₃, Sb₂S₃, Sb₂Se₃, Sb₂Te₃, Bi₂O₃, Bi₂S₃, Bi₂Se₃, and Bi₂Te₃; compounds each including a group 11 element and group 16 element in the periodic table, such as Cu₂O and Cu₂Se; compounds each including a group 11 element and group 17 element in the periodic table, such as CuCl, CuBr, CuI, AgCl, and AgBr; compounds each including a group 10 element and group 16 element in the periodic table, NiO; compounds each including a group 9 element and group 16 element in the periodic table, such as CoO and CoS; compounds each including a group 8 element and group 16 element in the periodic table, such as iron oxides, e.g., Fe₃O₄, and FeS; compounds each including a group 7 element and group 16 element in the periodic table, such as MnO; compounds each including a group 6 element and group 16 element in the periodic table, such as MoS₂ and WO₂; compounds each including a group 5 element and group 16 element in the periodic table, such as VO, VO₂, and Ta₂O₅; compounds each including a group 4 element and group 16 element in the periodic table, such as titanium oxides, e.g., TiO₂, Ti₂O₅, Ti₂O₃, and Ti₅O₉ (crystal type may be any of a rutile type, a rutile/anatase mixed type, and an anatase type), and ZrO₂; compounds each including a group 2 element and group 16 element in the periodic table, such as MgS and MgSe; chalcogen spinels, such as CdCr₂O₄, CdCr₂Se₄, CuCr₂S₄, and HgCr₂Se₄; and BaTiO₃.

Among these semiconductor ultrafine particles, preferred are particles of compounds each including a group 14 element and group 16 element in the periodic table, compounds each including a group 13 element and group 15 element in the periodic table, compounds each including a group 13 element and group 16 element in the periodic table, compounds each including a group 12 element and group 16 element in the periodic table, compounds each including a group 15 element and group 16 element in the periodic table, compounds each including a group 4 element and group 16 element in the periodic table, and compounds each including a group 2 element and group 16 element in the periodic table. In particular, SnO₂, GaN, GaP, In₂O₃, InN, InP, Ga₂O₃, Ga₂S₃, In₂O₃, In₂S₃, ZnO, ZnS, CdO, CdS, titanium oxides, ZrO₂, and MgS are preferred from the viewpoint of high refractive indexes and environmental contamination resistance and safety of organisms due to the absence of high-toxicity negative elements. Furthermore, SnO₂, In₂O₃, ZnO, ZnS, iron oxides, titanium oxides, and ZrO₂ are more preferred because of their compositions not containing high-toxicity positive elements. In particular, oxide semiconductor crystals, such as ZnO, titanium oxides (preferably a rutile crystal for a high refractive index), and ZrO₂ are most preferred. Furthermore, ultrafine particles having a luminescent band in the visible region and the vicinity thereof are industrially important. Examples of such ultrafine particles include ultrafine particles of compounds each including a group 13 element and a group 15 element in the periodic table, such as GaN, GaP, GaAs, InN, and InP; compounds each including a group 12 element and a group 16 element in the periodic table, such as ZnO, ZnS, ZnSe, ZnTe, CdO, CdS, CdSe, CdTe, HgO, and HgS; In₂O₃; and In₂S₃. In particular, compound semiconductors each including a group 12 element and a group 16 element in the periodic table, such as ZnO, ZnS, ZnSe, ZnTe, CdO, CdS, and CdSe, are preferred from the viewpoint of controllability of the grain size of semiconductor crystals and luminescent ability, and ZnSe, CdS, and CdSe are more preferably used for this purpose. These examples of the semiconductor crystals may have a composition containing a trace of an element, such as Al, Mn, Cu, Zn, Ag, Cl, Ce, Eu, Tb, or Er, according to demand.

Among these ultrafine particles, metal ultrafine particles containing a transition metal element of any one of the groups 8 to 13 in the periodic table are preferred because of the high force of forming a coordinate bond between the mercapto group of the polymer having the mercapto group at one end and the transition metal element and the rapid progress of surface modification reaction of the ultrafine particles.

The ultrafine particles used in the present invention are generally produced by synthesis from a precursor of a metal or a semiconductor using a general process for producing ultrafine particles, such as a vapor phase process, a liquid phase process, or the like. However, the process for producing the ultrafine particles is not limited to these, and any known process can be used. An example of known processes will be described below.

As a process for producing metal ultrafine particles, a liquid phase process can be used, in which a transition metal ion compound or its salt or an organic complex thereof is reduced by uniform contact with a reducing agent in water or a polar solvent. An example of a process for producing composite ultrafine particles having metal-coated surfaces is a process in which previously prepared ultrafine particles (metal ultrafine particles, semiconductor ultrafine particles, metal oxide ultrafine particles, or the like) are uniformly dispersed in water or a polar solvent, and a transition metal ion compound or its salt or an organic complex thereof is reduced by uniform contact with a reducing agent in water or a polar solvent in coexistence of the ultrafine particles.

Examples usable as a process for producing semiconductor ultrafine particles include a process (reversed micelle process) in which an aqueous raw material solution is placed in a reversed micelle of a nonpolar organic solvent to growth a crystal, a process (hot soap process) in which a pyrolytic raw material is subjected to crystal growth in a liquid organic solvent at a high temperature, and the like. These processes can be preferably used from the viewpoint of easy control of the particle size of the ultrafine particles.

The ultrafine particles used in the present invention preferably have, in an unaggregated state, a number-average primary particle size of 100 nm or less, more preferably 50 nm or less, further preferably 30 nm or less, and most preferably 15 nm or less. When the number-average primary particle size in an unaggregated state is larger than 100 nm, excellent optical properties, thermal and mechanical properties, electric properties, magnetic properties, and the like may not be obtained by the special effect of addition of the ultrafine particles. In view of higher dispersibility, the lower limit of the number-average primary particle size in an unaggregated state is 0.2 nm and more preferably 1 nm. Furthermore, the coefficient of variation (particle size distribution) of the number-average primary particle size of the ultrafine particles in an unaggregated state is preferably 50% or less and more preferably 30% or less. When the particle size distribution of the ultrafine particles is too wide, i.e., the coefficient of variation of the particle size exceeds 50%, excellent optical properties, thermal and mechanical properties, electric properties, magnetic properties, and the like may not be obtained by the special effect of addition of the ultrafine particles.

In the present invention, the number-average primary particle size in an unaggregated state means the number-average particle size calculated from ruler measurements of the particles sizes of at least 100 particles in a transmission electron micrograph or scanning electron micrograph. When particles micrographed by an electron microscope are not circular, the area of each particle is calculated, and the diameter of a circle having the same area can be used.

The surfaces of the ultrafine particles used in the present invention are modified by the polymer having a mercapto group at one end to significantly improve the dispersibility in a resin composition, and thereby a resin composition containing the ultrafine particles and having excellent characteristics can be easily obtained.

A method for modifying the surfaces of the ultrafine particles with the polymer having a mercapto group at one end is not particularly limited, and any method can be used. For example, when the polymer having a mercapto group at one end can be dissolved in a solvent in which the ultrafine particles can be dispersed, the surfaces of the ultrafine particles can be modified by a method in which the ultrafine particles are dispersed in the solvent, and the polymer having a mercapto group at one end is dissolved in the same solvent, followed by stirring to bond mercapto groups at the ends of the polymer to the surfaces of the ultrafine particles.

When the polymer having the mercapto group at one end cannot be or is hardly dissolved in a solvent in which the ultrafine particles can be dispersed, the surfaces of the ultrafine particles can be modified by any one of the following various operations:

For example, a modifier which has a ligand with relatively weak coordination force in its molecule, such as an amino group, a phosphine oxide group, a phosphine group, or the like, and which can be dissolved in a solvent for dispersing the ultrafine particles, is selected, and the ligand having weak coordination force is previously bonded to the surfaces of the ultrafine particles. Then, the ultrafine particles are isolated by centrifugal separation or the like, and then dispersed in a solvent in which the polymer having a mercapto group at one end can be dissolved. The polymer having a mercapto group at one end is dissolved in the solvent and brought into contact with the ultrafine particles in the liquid phase containing the ultrafine particles to produce ligand exchange reaction, thereby substituting the ligand having weak coordination force by a mercapto group. Alternatively, two-step ligand exchange may be preferably used, the ligand exchange including a first step of dispersing the ultrafine particles in a liquid phase containing an excessive amount of a compound with weak coordination force (generally used as a solvent), such as pyridine, and a second step of adding the polymer having a mercapto group at one end.

The surfaces of the ultrafine particles may be modified by a method in which the ultrafine particles are dispersed in a solvent which can disperse them, and the resultant dispersion is mixed with a solution separately prepared by dissolving the polymer having a mercapto group at one end in a solvent which can dissolve it. In this method, when the solvent dispersing the ultrafine particles is not miscible with the solvent dissolving the polymer, the ultrafine particles are extracted with the solvent dissolving the polymer as modification of the surfaces of the ultrafine particles proceeds. This is preferred because the completion of modification can be easily confirmed. In this case, a phase-transfer catalyst, such as a tetraalkylammonium salt, a tetraalkylphosphonium salt, or the like, may be preferably combined.

Another effective method is to add the polymer having a mercapto group at one end to a reaction liquid phase during the production of the ultrafine particles in the liquid phase. This method is capable of completing the modification of the surfaces of the ultrafine particles at the same time as synthesis of the ultrafine particles, and also the effect of preventing aggregation of the ultrafine particles during synthesis of the ultrafine particles can be expected. Therefore, this method is preferred as a modification method.

In modifying the ultrafine particles with the polymer having a mercapto group at one end, the modification reaction can be more effectively completed by uniform stirring. When ultrasonic waves are applied during stirring, the surfaces can be uniformly modified with prevention of aggregation. When microwaves are applied, energy can be locally applied to the particles, and thus the efficiency of surface modification may be significantly improved.

Other usable methods for modifying the surfaces of the ultrafine particles with the polymer having a mercapto group at one end include a method in which the ultrafine particles are powdered by centrifugal separation or the like and then mixed with a melt of the polymer having a mercapto group at one end, a method in which a dispersion of the ultrafine particles in a solvent is added to a melt of the polymer having a mercapto group at one end and mixed therewith under shear force, and then the solvent is removed under reduced pressure or evaporated to modify the ultrafine particles, and the like. As an apparatus for mixing the ultrafine particles with a melt of the polymer having a mercapto group at one end in these methods, a single-screw extruder, a multi-screw kneader such as a double-screw extruder or a quadruple-screw extruder, a roller, a Banbury mixer, a kneader, or the like can be used. Among these apparatuses, a kneader having high shearing efficiency is preferred, and a multi-screw kneader such as a double-screw extruder or a quadruple-screw extruder, is particularly preferred because of the high efficiency of modification reaction and ease of industrialization.

The ratio by weight between the polymer having a mercapto group at one end and the ultrafine particles greatly varies depending on the purpose of use, the composition and molecular weight of the polymer, the specific gravity of the ultrafine particles, the particle size and surface area of the ultrafine particles, the surface state of the ultrafine particles, etc. In other words, when the polymer has a relatively high molecular weight, a relatively large amount of the polymer must be used for modifying the entire surfaces of the particles because of the number of mercapto groups in the polymer is decreased. On the other hand, when the polymer has a relatively low molecular weight, the amount of the polymer added may be small because the number of the mercapto groups in the polymer is increased. When the ultrafine particles have a relatively small particle size, a relatively large amount of the polymer must be used for modifying the entire surfaces of the particles because the number of the ultrafine particles is increased to increase the surface area. On the other hand, when the ultrafine particles have a relatively large particle size, the amount of the polymer added may be small.

As a general standard for the ratio by weight between the polymer having a mercapto group at one end and the ultrafine particles, the ratio by weight may be determined on the basis of such calculation that the number of the constituent atoms present at the surfaces of the ultrafine particles is substantially close to the number of the mercapto groups of the polymer. Namely, when the ultrafine particles have a small particle size, many surface irregularities, or porosity, the amount of the polymer having a mercapto group at one end and used for improving dispersibility tends to increase as the ratio of the constituent atoms present in the surfaces of the ultrafine particles increases.

A method for mixing the resultant polymer-modified ultrafine particles in a resin having compatibility with the polymer-modified ultrafine particles is not particularly limited, and any known mixing method can be used.

For example, the polymer-modified ultrafine particles are dispersed in a solvent which can dissolve the resin, and the resin is dissolved in the solvent, followed by stirring to prepare a uniform solution. Then, the solvent is removed by evaporation or the like to easily produce a resin composition in which the ultrafine particles are uniformly dispersed in the resin. In this method, in order to improve the dispersibility of the ultrafine particles and prevent aggregation of the ultrafine particles, the solution is preferably stirred with any one of various known apparatuses, for obtaining the resin composition containing the ultrafine particles uniformly dispersed therein. Examples of a stirring method include, but are not limited to, a method of rotating a rotating device such as a stir bar, a stir rod, or the like in the solvent, a method of stirring with a medium such as beads, a method of stirring by irradiation with ultrasonic waves or the like, a method of stirring by applying high shear force of high-speed rotation or the like, and the like.

Further usable methods for producing the resin composition include a method in which the polymer-modified ultrafine particles are isolated from a solvent by centrifugal separation or the like and then mixed in a melt of the resin to disperse the polymer-modified ultrafine particles in the resin, a method in which a dispersion of the polymer-modified ultrafine particles in a solvent is added to a melt of the resin and mixed therewith under shear force, and then the solvent is removed under reduced pressure or evaporated to disperse the polymer-modified ultrafine particles, and the like. As an apparatus for producing the resin composition by these methods, a single-screw extruder, a multi-screw kneader such as a double-screw extruder or a quadruple-screw extruder, a roller, a Banbury mixer, a kneader, or the like can be used. In particular, a kneader having high shearing efficiency is preferred.

In the resin composition containing the ultrafine particles produced in the present invention, 80% or more, more preferably 85% or more, and most preferably 90% or more of the total ultrafine particles are independently present without contact with each other. Since such ultrafine particles are uniformly dispersed in the resin composition, the resultant resin composition has no defect in the excellent optical properties, thermal and mechanical properties, electric properties, magnetic properties, and the like which are inherently possessed by ultrafine particles. When over 20% of the total ultrafine particles are present in contact with each other, i.e., when over 20% of the ultrafine particles are aggregated, the resin composition exhibits properties like those of particles dispersed in a resin and having a particle size equivalent to that of aggregates of ultrafine particles, not the properties inherently possessed by ultrafine particles. Therefore, the optical properties, thermal and mechanical properties, electric properties, magnetic properties, and the like tend to be impaired.

The shape of the ultrafine particles usable in the present invention is not particularly limited, and any desired shape can be used. Examples of the shape include a spherical shape; three-dimensional shapes close to a sphere, such as a rugby ball-like shape, a soccer ball-like shape, and an icosahedral shape; a hexahedral shape; a rod-like shape; a needle-like shape; a plate-like shape; a scale-like shape; a crushed shape; and irregular shapes. Furthermore, the particles may have hollows or defects in the surfaces or inside the particles or may be porous particles having many pores in the surfaces and inside the particles. However, from the viewpoint of ease of production of the ultrafine particles, ease of uniform dispersion in the resin, ease of treatment of the particle surfaces, and the like, a spherical shape or a three-dimensional shape close to a sphere is preferred. The term "a three-dimensional shape close to sphere" means a shape preferably having a (surface area of particle)/(surface area of sphere having the same volume as particle) ratio of 3 or less, more preferably 2 or less, and particularly preferably 1.5 or less. The ultrafine particles used in the present invention may be of a single type, a combination of two or more types of particles, or a combination of particles having two or more shapes. The ultrafine particles may be a combination of two or more types of particles having different particle size distributions.

The lower limit of the content of the ultrafine particles in the resin composition of the present invention is preferably 0.0001 part by weight, more preferably 0.001 part by weight, further preferably 0.01 part by weight, and most preferably 0.1 part by weight relative to 100 parts by weight of the resin. The upper limit of the content is preferably 200 parts by weight, more preferably 150 parts by weight, further preferably 100 parts by weight, and most preferably 50 parts by weight. When the content of the ultrafine particles is less than 0.0001 part by weight, the electronic, optical, electric, magnetic, chemical, and mechanical properties characteristics of the addition of the ultrafine particles may not be sufficiently obtained. When the content exceeds 200 parts by weight, the ultrafine particles tend to become difficult to disperse.

In the resin composition of the present invention, the ratio between the polymer having the mercapto group at one end and the resin is determined by the ratio between the ultrafine particles and the polymer having the mercapto group at one end and the ratio between the resin and the ultrafine particles. However, a preferred range varies depending on the types of the resin and the particles and the purpose of use, and the like. In particular, when a dispersion of a large amount of the ultrafine particles in the resin is desired, most of the ultrafine particles being modified with the polymer having a mercapto group at one end, the polymer having a mercapto group at one end can also be used as the resin. In this case, the resin in the resin composition entirely has a mercapto group at one end, and thus the modified ultrafine particles and the resin need not be mixed, thereby greatly facilitating uniform dispersion of the ultrafine particles in the resin.

The resin used in the resin composition of the present invention is not particularly limited, and a wide range of various known thermoplastic resins and thermosetting resins can be used alone or in combination of two or more selected therefrom according to demand.

However, when the resin used in the resin composition and the polymer having a mercapto group at one end have compositions miscible with each other, the ultrafine particles can be dispersed in the resin with high dispersibility. In other words, the resin used in the resin composition and the polymer having a mercapto group at one end are preferably compatible with each other.

As a method for determining whether or not the resin used in the resin composition and the polymer having a mercapto group at one end are miscible with each other, determination is made as to whether or not a uniform composition can be obtained by mixing the resin used in the resin composition and the polymer having a mercapto group at one end in the absence of the ultrafine particles. In the present invention, the term "compatible" means that a mixture of a resin and a polymer is seen with the eyes as a combination of uniformly miscible resin and polymer. In particular, when an ultrathin section of a mixture of the resin and the polymer is observed through a transmission electron microscope or the like, the combination preferably has such a degree of excellent compatibility that both are ultrafinely dispersed at the nanometer-order level or such a degree of compatibility that the boundaries between both are not observed. This is because the dispersibility of the ultrafine particles in a dispersion is significantly excellent, and the resin composition containing the ultrafine particles uniformly dispersed in the polymer can be easily obtained.

In observation of an ultrathin section of the mixture through a transmission electron microscope, when a micro-size layered structure is observed while the mixture is seen with the eyes as a uniformly mixed composition, the effect of improving the dispersibility of the ultrafine particles can be slightly expected. However, the expected effect of improving the dispersibility may be only equivalent to that obtained by an ordinary well-known modifier for ultrafine particles. In this case, therefore, a proper dispersion method or the like is preferably selected.

The particularly preferred combination of the resin used in the resin composition and the polymer having a mercapto group at one end has the chemically same composition. The combination more preferably has similar molecular weight distributions or similar main-chain and branch structures in addition to the same composition because the compatibility is further improved.

When the excellent optical properties are expected from the resultant resin composition, the resin used in the present invention is preferably a resin transmitting visible light. Specifically, the term "resin transmitting visible light" means a resin exhibiting a total light transmittance of 50% or more in measurement with a thickness of 2 mm on the basis of ASTM D1003. However, in order to use the composition of the present invention for optical applications, the total light transmittance is suitably as high as possible, and preferably 60% or more, more preferably 70% or more, and most preferably 80% or more. Also, a resin transmitting visible light preferably has a as small haze as possible in measurement with a thickness of 2 mm on the basis of ASTM D1003. Specifically, the haze is 10% or less, preferably 7% or less, more preferably 5% or less, and most preferably 3% or less. Specific examples of the resin transmitting visible light include polyolefins, such as polyethylene and polypropylene; olefin/vinyl monomer copolymers, such as olefin/maleimide copolymers; aromatic vinyl polymers, such as polystyrene; aromatic vinyl/vinyl monomer copolymers, such as styrene/acrylonitrile copolymers, styrene/methyl methacrylate copolymers, and styrene/maleimide copolymers; polymethacrylates, such as polymethyl methacrylate; polyacrylates, such as polymethyl acrylate; polyphenylenether; polycarbonates; polyvinyl chloride; polyethylene terephthalate; polyarylate; polyethersulfone; polyethylene naphthalate; polymethylpentene-1; alicyclic polyolefins (e.g., ring-opened polymers(copolymers)of cyclic olefins, such as dicyclopentadiene-based polyolefins and norbornene-based polyolefins, and hydrogenated polymers (copolymers) thereof, and saturated copolymers of cyclic olefins and unsaturated double bond-containing compounds); copolymers of alicyclic methacrylate or alicyclic acrylates, e.g., tricyclodecanyl methacrylate, cyclohexyl methacrylate, or the like, and acrylates or methacrylates, e.g., methyl methacrylate; polysulfone; polyether-imide, amorphous polyamides; cellulose resins, such as triacetyl cellulose; glutarimide resins; hydrogenated polymers obtained by hydrogenating polymers (copolymers) of cyclic olefins, cyclopentadiene, and aromatic vinyl compounds; and the like. Among these resins, polymethyl methacrylate resins, polycarbonate resins, polystyrene resins, cycloolefin resins, cellulose resins, vinyl chloride resins, polysulfone resins, polyethersulfone resins, maleimide-olefin resins, and glutarimide resins have preferred optical properties. These resins may be used as a mixture of two or more. However, when a mixture of two or more of the light-transmitting resins is used, simple mixing may decrease light transmittance. Therefore, it is necessary to increase the compatibility between the resins mixed to achieve a substantially uniform composition. As a method for increasing the compatibility between the resins mixed, a method of adding a small amount of a copolymer of both resins as a compatibilizer, or the like can be used.

The resin composition produced in the present invention may contain additives such as a pigment or a dye, a heat stabilizer, an antioxidant, an ultraviolet absorber, a light stabilizer, a lubricant, a plasticizer, a flame retardant, and an antistatic agent according to purposes.

The resin composition produced in the present invention can be molded by any one of various molding methods, such as injection molding, blow molding, extrusion molding, heat pressing, vacuum molding, cast film formation, roll film formation, T-die film formation, and inflation film formation. In addition, a foaming agent can be used for foam molding. The resultant molding can be suitably used for general industrial materials, such as electric and electronic parts, optical materials and optical parts, magnetic materials and magnetic parts, other automobile parts, electric home appliance parts, daily home articles, and packaging materials, and the like.

### (Examples)

The present invention will be described below with reference to examples, but the present invention is not limited to these examples.
Measurement of number-average primary particle size of ultrafine particles in unaggregated state: An appropriate amount of ultrafine particles was ultrasonically dispersed in a dispersing solvent. Then, a small amount of the resultant dispersion was applied on a silicon wafer and observed through a scanning electron microscope (SEM), or the particles were fixed on a mesh with a collodion membrane attached thereto and observed through a transmission electron microscope (TEM). The particle sizes of at least 100 ultrafine particles in the electron micrograph were manually measured using a graduated ruler to measure the number-average primary particle size.
Measurement of disperse state of ultrafine particles in resin composition: An ultrathin section for TEM observation was prepared using an ultramicrotome (Leica ultracut UCT) from the resin composition produced by the process described in each example, and the disperse state of the ultrafine particles was micrographed at a plurality of positions with a transmission electron microscope (TEM) (JEM-1200EX, JEOL Ltd.) with a magnification of 100,000 to 400,000. The number of the confirmable independent particles within the field of view was counted in a range of 100 µm² or more using a plurality of the obtained TEM micrographs, and a ratio of the independent particles to the total number of the particles was calculated.
Measurement of UV-VIS absorption wavelength: The light transmittance of a dispersion of particles in a solvent was measured within a quartz cell (12.5 x 12.5 x 45 mm) using UV-visible spectrophotometer UV-3150 manufactured by Shimadzu Corporation, while the light transmittance of a resin film was measured in a film form.
Measurement of luminescent wavelength: The luminescent wavelength of a dispersion of particles in a solvent was measured by irradiating exciting light within a quartz cell (12.5 x 12.5 x 45 mm) using a luminescence spectrometer LS55 manufactured by PERKIN-ELMER, while the luminescent wavelength of a resin film was measured in a film form. Measurement of visible light transmittance: A test piece of a size of 50 mm x 50 mm x 2 mm was formed using a 80-t injection molding machine manufactured by Nissei Plastic Industrial Co., Ltd. The test piece was measured with respect to total light transmittance using turbidimeter 300A manufactured by Nippon Denshoku Industries Co., Ltd. at a temperature of 23°C±2°C and a humidity of 50%±5% on the basis of ASTM D1003.

The metal ultrafine particles used were as follows:

As a dispersion of gold ultrafine particles in an organic solvent, metal particles were extracted from Perfect Gold manufactured by Shinku Yakin Co., Ltd., and the surfaces of the particles were partially modified with dodecylamine. Then, the particles were diluted with chloroform to prepare a chloroform solution at a gold concentration of 0.93 mg/ml. The number-average primary particle size of the gold particles measured by SEM observation was about 4 nm, and the shape of the gold particles was spherical. The organic solvent dispersion assumed a red-purple color and showed an absorption peak wavelength of 519 nm in measurement of the UV-VIS absorption wavelength.

As an aqueous dispersion of gold ultrafine particles, an aqueous colloidal dispersion of gold nano-particles (manufactured by Nanolabo Co., Ltd.) at a concentration of 3 mmol/L synthesized by reduction of hydrogen tetrachloroaurate(HAuCl₄) with citric acid and tannic acid was used. The number-average primary particle size of the gold particles measured by SEM observation was about 8.7 nm, and the shape of the gold particles was spherical. The aqueous solution assumed a purple color and showed an absorption peak wavelength of 527 nm in measurement of the UV-VIS absorption wavelength.

As a dispersion of silver ultrafine particles in an organic solvent, metal particles were extracted from Perfect Silver manufactured by Shinku Yakin Co., Ltd., and the surfaces of the particles were partially modified with dodecylamine. Then, the particles were diluted with chloroform to prepare a chloroform solution at a silver concentration of 1.00 mg/ml. The number-average primary particle size of the silver particles measured by SEM observation was about 4 nm, and the shape of the silver particles was spherical. The organic solvent dispersion assumed a yellow color and showed an absorption peak wavelength of 420 nm in measurement of the UV-VIS absorption wavelength.

Iron-platinum ultrafine particles were synthesized according to T. Iwaki et al., J. Appl. Phys., 94, 6807 (2003). The number-average primary particle size of the iron-platinum particles measured by TEM observation was about 4.0 nm, and the shape of the particles was spherical. The Fe/Pt element ratio measured by a X-ray fluorescence spectrometer was 52:48. The iron/platinum ultrafine particles were used as an ethylene glycol dispersion of iron-platinum nano-particles at a particle concentration of 1 g/L.

CdSe ultrafine particles were synthesized according to M. Kawa et al., J. Nanoparticle Res., 5, 81 (2003). The number-average primary particle size of the CdSe particles measured by TEM observation was about 3 nm, and the shape of the CdSe particles was spherical. As a result of irradiation of a toluene solution with exciting light at a wavelength of 299 nm using a luminescence spectrometer, green light was emitted at a peak wavelength of 519 nm with a half-value width of 48 nm.

Core-shell CdSe nano-particles having ZnS shells were produced in Production Example 1 below using the above-described CdSe ultrafine particles.

### (Production Example 1) Production of semiconductor ultrafine particles (core-shell CdSe nano-particles having ZnS shells)

In a brown glass flask filled with dry argon gas, 15 g of trioctylphosphine oxide was charged and stirred for about 2 hours in a melt state at 130°C to 150°C during repeated operations each including evacuation and injection of dry argon gas to dry the trioctylphosphine oxide. After cooling to 100°C, a solution of 0.094 g of CdSe nano-particle solid powder in 1.5 g of trioctylphosphine was added to prepare a solution of CdSe nano-particles. The resultant solution was stirred for 60 minutes at 100°C under reduced pressure, and then the temperature was set to 180°C and the pressure was returned to atmospheric pressure using dry argon gas. On the other hand, in a dry nitrogen atmosphere in a glove box, a raw material solution was separately prepared by dissolving 1.34 mL of a 1N n-hexane solution of diethylzinc and 0.239 g of bis(trimethylsily)sulfide in 9 mL of trioctylphosphine in a light-shielding glass bottle. The raw material solution was added dropwise to the CdSe solution over 20 minutes using a syringe, and the temperature was dropped to 90°C, followed by continuous stirring for 60 minutes. The resultant mixture was allowed to stand at room temperature for about 24 hours and then again stirred at 90°C for 3 hours. Then, 8 mL of n-butanol was added to the mixture, and the mixture was cooled to room temperature to obtain a transparent red solution. A portion (8 mL) of the red solution was added dropwise to 16 mL of absolute methanol at room temperature in a dry nitrogen stream, and a precipitation operation of continuing stirring for 20 minutes was performed to obtain a red insoluble substance. The red insoluble substance was isolated by centrifugal separation and decantation and then again dissolved in 14 mL of purified toluene. Similarly, a series of purification operations including precipitation from the toluene solution prepared by redissolution, centrifugal separation, and decantation was further repeated two times to produce core-shell CdSe nano-particle solid powder having ZnS shells. The number-average primary particle size of the particles measured by TEM observation was about 5 nm, and the shape of the particles was spherical. The solid powder was dispersed in toluene to produce a transparent uniform red solution. When the solution was irradiated with exciting light at a wavelength of 468 nm, an orange luminescent band (peak wavelength 597 nm, half-value width 41 nm) was produced, and the intensity of the luminescence was higher than that of a CdSe nano-particle solution at the same concentration.

A polymer having a mercapto group at one end was produced as in Production Examples 2 to 6.

### (Production Example 2) Production of polymethyl methacrylate containing a mercapto group at one end

First, 1.21 g of a compound represented by formula (13) as a thiocarbonylthio group-containing compound and 0.27 g of 2,2'-azobisisobutyronitrile as a polymerization initiator were weighed and charged in a reactor provided with a reflux condenser, a nitrogen gas inlet tube, a thermometer, and a magnetic stir bar. 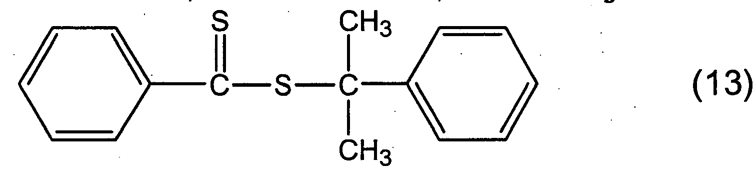 Separately, 149.9 g of methyl methacrylate as a monomer and 149.2 g of toluene as a solvent were weighed and charged in another vessel. Both vessels were connected together with a canula, and deoxygenation and nitrogen replacement were carried out by a method of evacuating the system while introducing a nitrogen gas. About 1/10 of the toluene solution of methyl methacrylate was transferred to the reactor through the canula and heated at 70°C under stirring. One hour after, the residual toluene solution of methyl methacrylate was slowly added over 3 hours. After the completion of the addition, stirring was further performed at 70°C for 7 hours. Then, the reaction solution was poured into 2 L of methanol to precipitate a polymer, and the precipitated polymer was washed with methanol and dried to obtain 78.2 g of polymethylmethacrylate having a thiocarbonylthio group at one end (Mw = 25,800, Mn = 21,100, Mw/Mn = 1.22).

The resultant polymer was dissolved in 220 mL of toluene, and 45.5 g of n-butylamine was added to the resultant solution, followed by stirring at room temperature for 30 hours. Then, the solution was poured into 2 L of methanol to precipitate a polymer, and the precipitated polymer was washed with methanol and dried to obtain 74.1 g of polymethyl methacrylate having a mercapto group at one end. Analysis of the sulfur content showed 0.25% by weight before the addition of the amine and 0.14% by weight after the treatment with the amine.

### (Production Example 3) Production of poly(acrylonitrile/styrene) containing a mercapto group at one end

In a reactor provided with a reflux condenser, a nitrogen gas inlet tube, a thermometer, and a magnetic stir bar, 1.35 g of a compound represented by formula (13) as a thiocarbonylthio group-containing compound, 100.3 g of acrylonitrile and 100.4 g of styrene as monomers, 200.1 g of toluene as a solvent, and 0.30 g of 2,2'-azobisisobutyronitrile as a polymerization initiator were charged. 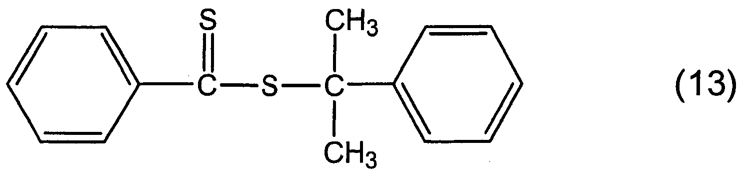 Then, deoxygenation and nitrogen replacement were performed by a method of evacuating the system while bubbling with a nitrogen gas. After stirring at 70°C for 10 hours, the reaction solution was cooled to room temperature and poured into 2.5 L of methanol to precipitate a polymer. The polymer was washed with methanol and dried to obtain 91.6 g of poly(acrylonitrile/styrene) having a thiocarbonylthio group at one end (Mw = 31,300, Mn = 25,800, Mw/Mn = 1.21; acrylonitrile/styrene molar ratio = 50/50).

The resultant polymer was dissolved in 220 mL of acetone, and 45.1 g of diethylamine was added to the solution, followed by stirring at room temperature for 30 hours. Next, the resultant mixture was poured into 2.5 L of methanol to precipitate a polymer. The polymer was washed with methanol and then dried to obtain 88.3 g of poly(acrylonitrile/styrene) having a mercapto group at one end. Analysis of the sulfur content showed 0.28% by weight before the addition of the amine and 0.14% by weight after the treatment with the amine.

### (Production Example 4) Production of polystyrene having a mercapto group at one end

In a reactor provided with a reflux condenser, a nitrogen gas inlet tube, a thermometer, and a magnetic stir bar, 3.22 g of a compound represented by formula (13) as a thiocarbonylthio group-containing compound, 100.3 g of styrene as a monomer, 98.1 g of toluene as a solvent, and 0.61 g of 2,2'-azobisisobutyronitrile as a polymerization initiator were charged. 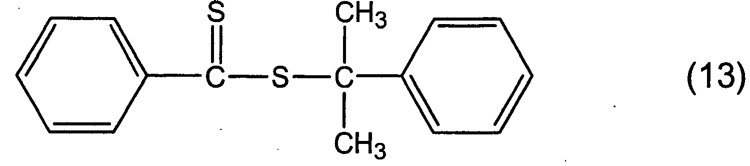 Then, deoxygenation and nitrogen replacement were performed by a method of evacuating the system while bubbling with a nitrogen gas. After the reaction solution was stirred at 70°C for 14 hours, the solution was cooled to room temperature and sampled to confirm the production of polystyrene (Mw = 4,300, Mn = 3,700, Mw/Mn = 1.16) having a thiocarbonylthio group at one end. The monomer conversion rate was 30%.

Next, 25.0 g of diethylamine was added as a treating agent, followed by stirring at 50°C for 8 hours. The resultant solution was poured into 500 mL of methanol to precipitate a polymer. The resulting polymer was dried (34.5 g) and then analyzed by ¹H-NMR to confirm the conversion to a mercapto group at one end.

### (Production Example 5) Production of polyvinyl alcohol having a mercapto group at one end

In a reactor provided with a reflux condenser, a nitrogen gas inlet tube, a thermometer, and a magnetic stir bar, 0.399 g of a compound represented by formula (14) as a thiocarbonylthio group-containing compound, 50.0 g of vinyl acetate as a monomer, 40.0 g of ethyl acetate as a solvent, and 0.059 g of 2,2'-azobisisobutyronitrile as a polymerization initiator were charged. 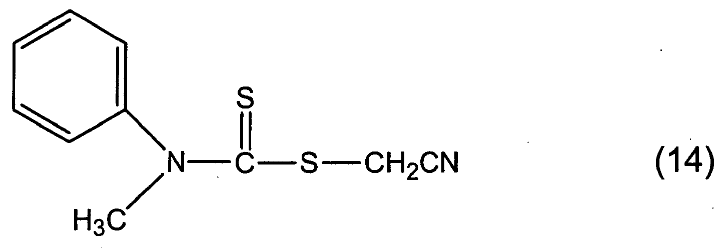 Then, deoxygenation and nitrogen replacement were performed by a method of evacuating the system while bubbling with a nitrogen gas. After stirring at 70°C for 5 hours, the reaction solution was cooled to room temperature and poured into 800 mL of hexane to precipitate a polymer. The polymer was washed with hexane and dried to obtain 25.4 g of polyvinyl acetate having a thiocarbonylthio group at one end (Mw = 26,000, Mn = 20,200, Mw/Mn =1.29).

The total resultant polyvinyl acetate was dissolved in 100 mL of ethanol, and 1.8 g of n-butyl acrylate as a monomer and 0.04 g of 2,2'-azobisisobutyronitrile as a polymerization initiator were added to the resultant solution. Then, deoxygenation and nitrogen replacement were performed by a method of evacuating the system while bubbling with a nitrogen gas. After stirring at 70°C for 8 hours, the reaction solution was sampled to confirm the production of polyvinyl acetate having a thiocarbonylthio group at one end through a chain of n-butyl acrylate (Mw = 28,200, Mn = 21,100, Mw/Mn = 1.34). Next, 44 g of a methanol solution (28% by weight) of sodium methoxide was slowly added to the solution. The color of the solution was changed from light yellow to brown with the addition of the methanol solution, and a large amount of white precipitate was finally produced. Ten hours after, the solution was filtered, and the obtained white precipitate was repeatedly washed with methanol to obtain 11.8 g of polyvinyl alcohol having a mercapto group at one end through a chain of acrylates (mixture of butyl ester and methyl ester). The conversion to a mercapto group at one end was confirmed by ¹H-NMR analysis.

### (Production Example 6) Production of polymethacrylic acid having a mercapto group at one end

In a reactor provided with a reflux condenser, a nitrogen gas inlet tube, a thermometer, and a magnetic stir bar, 0.53 g of a compound represented by formula (13) as a thiocarbonylthio group-containing compound, 48.3 g of methacrylic acid as a monomer, 30 g of methanol and 20 g of distilled water as solvents, and 0.062 g of 2,2'-azobisisobutyronitrile as a polymerization initiator were charged: 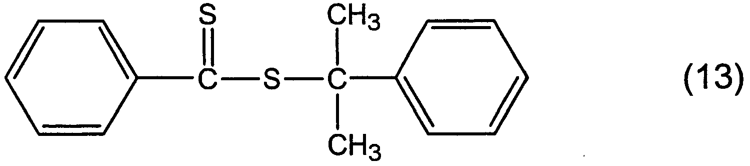 Then, deoxygenation and nitrogen replacement were performed by a method of evacuating the system while bubbling with a nitrogen gas. After stirring at 70°C for 3 hours, the reaction solution was cooled to room temperature, and 5.5 g of sodium hydroxide was added to the reaction solution, followed by stirring at room temperature for 12 hours. Next, the reaction solution was poured into 500 mL of tetrahydrofuran to precipitate a polymer. The resulting polymer was purified by reprecipitation with water/tetrahydrofuran to obtain 31.1 g of polymethacrylic acid having a mercapto group at one end (Mw = 27,200, Mn = 20,500, Mw/Mn = 1.33). Analysis of the sulfur content showed 0.26% by weight before the addition of sodium hydroxide and 0.14% by weight after the treatment with sodium hydroxide.

### (Example 1)

First, 2.59 mL of a dispersion of gold ultrafine particles in an organic solvent, 4.61 mL of chloroform, and 240 mg of the polymer obtained in Production Example 2 were mixed. Then, in a water bath at a temperature controlled to 20°C, the resultant mixture was irradiated with ultrasonic waves of 80 W and 38 kHz under stirring through the temperature control water of the water bath. The stirring and ultrasonic irradiation were continued for 24 hours to prepare a chloroform solution of gold nano-particles. Separately, 960 mg of a commercial PMMA resin (manufactured by Aldrich, Mw = 120,000, total light transmittance 93%) was dissolved in 4.8 ml of chloroform to prepare a PMMA chloroform solution. The PMMA chloroform solution and the gold nano-particle chloroform solution were uniformly mixed, and the resulting mixture was uniformly applied in a sealed vessel. The solvent was removed by spontaneous evaporation over about one day to produce a PMMA resin film containing gold nano-particles. The appearance of the resulting resin film was uniformly transparent and tinged with red-purple, and the average thickness was 60 µm. Figs. 1 and 2 show a TEM micrograph (low magnification) and a TEM micrograph (high magnification), respectively, of the resin film.

The ratio of the independent particles not in contact with each other was calculated from the TEM micrographs. As a result, the ratio was 100% which indicated the absence of aggregated particles. Also, in measurement of the UV-VIS absorption wavelength of the film, the absorption peak wavelength was 516 nm.

### (Example 2)

First, 10.36 mL of a dispersion of gold ultrafine particles in an organic solvent and 12,000 mg of the polymer obtained in Production Example 2 were mixed. Then, in a water bath at a temperature controlled to 20°C, the resultant mixture was irradiated with ultrasonic waves of 80 W and 38 kHz under stirring through the temperature control water of the water bath. The stirring and ultrasonic irradiation were continued for 24 hours to prepare a chloroform solution of gold nano-particles. The resulting solution was uniformly applied in a sealed vessel. The solvent was removed by spontaneous evaporation over about one day to produce a PMMA resin film containing gold nano-particles. The appearance of the resulting resin film was uniformly transparent and tinged with red-purple, and the average thickness was 60 µm. Figs. 3 and 4 show a TEM micrograph (low magnification) and a TEM micrograph (high magnification), respectively, of the resin film.

The ratio of the independent particles not in contact with each other was calculated from the TEM micrographs. As a result, the ratio was 99% which indicated substantially no presence of aggregated particles. Also, in measurement of the UV-VIS absorption wavelength of the film, the absorption peak wavelength was 517 nm.

### (Comparative Example 1)

A PMMA resin film containing gold nano-particles was produced by the same method as in Example 1 except that 240 mg of a commercial PMMA resin was used in place of 240 g of the polymer obtained in Production Example 2. The appearance of the resulting resin film was nonuniform due to such a degree of particle aggregation that aggregated particles could be observed with the eyes. Furthermore, the resin film was tinged with blue and had an average thickness of 60 µm. Figs. 5 and 6 show a TEM micrograph (low magnification) and a TEM micrograph (high magnification), respectively, of the resin film.

As a result of calculation of the ratio of the independent particles not in contact with each other from the TEM micrographs, the ratio was 0%. Also, in measurement of the UV-VIS absorption wavelength of the film, a clear absorption peak was not observed.

### (Comparative Example 2)

A PMMA resin film containing gold nano-particles was produced by the same method as in Example 1 except that 24 mg of dodecanethiol was used in place of 240 g of the polymer obtained in Production Example 2. The appearance of the resulting resin film was nonuniform due to such a degree of particle aggregation that aggregated particles could be observed with the eyes. Furthermore, the resin film was tinged with blue and had an average thickness of 60 µm. Figs. 7 and 8 show a TEM micrograph (low magnification) and a TEM micrograph (high magnification), respectively, of the resin film.

As a result of calculation of the ratio of the independent particles not in contact with each other from the TEM micrographs, the ratio was 5%. Also, in measurement of the UV-VIS absorption wavelength of the film, the absorption peak wavelength was 571 nm.

Furthermore, the same procedures as described above in Comparative Example 2 were carried out except that the amount of the dodecanethiol added was increased to 240 mg. However, substantially no change was observed in a disperse state by TEM.

### (Example 3)

First, 2.59 mL of a dispersion of gold ultrafine particles in an organic solvent, 4.61 mL of chloroform, and 240 mg of the polymer obtained in Production Example 3 were mixed. Then, in a water bath at a temperature controlled to 20°C, the resultant mixture was irradiated with ultrasonic waves of 80 W and 38 kHz under stirring through the temperature control water of the water bath. The stirring and ultrasonic irradiation were continued for 24 hours to prepare a chloroform solution of gold nano-particles. Separately, 960 mg of an acrylonitrile/styrene copolymer resin (manufactured by Polyscience Inc., acrylonitrile/styrene molar ratio = 25:75, total light transmittance 89%) was dissolved in 4.8 ml of chloroform to prepare a chloroform solution. The separately prepared chloroform solution and the gold nano-particle chloroform solution were uniformly mixed, and the resulting mixture was uniformly applied in a sealed vessel. The solvent was removed by spontaneous evaporation over about one day to produce an acrylonitrile/styrene resin film containing gold nano-particles. The appearance of the resulting resin film was uniformly transparent and tinged with purple, and the average thickness was 60 µm. As a result of calculation of the ratio of the independent particles not in contact with each other from a TEM micrograph, the ratio was 99%. Also, in measurement of the UV-VIS absorption wavelength of the film, the absorption peak wavelength was 512 nm.

### (Comparative Example 3)

An acrylonitrile/styrene resin film containing gold nano-particles was produced by the same method as in Example 3 except that 40 mg of dodecanethiol was used in place of 240 mg of the polymer obtained in Production Example 3. The appearance of the resulting resin film was nonuniform due to such a degree of particle aggregation that aggregated particles could be observed with the eyes. Furthermore, the resin film was tinged with blue and had an average thickness of 60 µm. As a result of calculation of the ratio of the independent particles not in contact with each other from a TEM micrograph, the ratio was 5%. Also, in measurement of the UV-VIS absorption wavelength of the film, the absorption peak wavelength was 571 nm.

### (Example 4)

First, 2.39 mL of a dispersion of silver ultrafine particles in an organic solvent, 4.81 mL of chloroform, and 240 mg of the polymer obtained in Production Example 2 were mixed. Then, in a water bath at a temperature controlled to 20°C, the resultant mixture was irradiated with ultrasonic waves of 80 W and 38 kHz under stirring through the temperature control water of the water bath. The stirring and ultrasonic irradiation were continued for 24 hours to prepare a chloroform solution of silver nano-particles. Separately, 960 mg of a commercial PMMA resin (manufactured by Aldrich, Mw = 120,000, total light transmittance 93%) was dissolved in 4.8 ml of chloroform to prepare a PMMA chloroform solution. The PMMA chloroform solution and the silver nano-particle chloroform solution were uniformly mixed, and the resulting mixture was uniformly applied in a sealed vessel. The solvent was removed by spontaneous evaporation over about one day to produce a PMMA resin film containing silver nano-particles. The appearance of the resulting resin film was uniformly transparent and tinged with yellow, and the average thickness was 60 µm. Figs. 9 and 10 show a TEM micrograph (low magnification) and a TEM micrograph (high magnification), respectively, of the resin film.

The ratio of the independent particles not in contact with each other was calculated from the TEM micrographs. As a result, the ratio was 100%. Also, in measurement of the UV-VIS absorption wavelength of the film, the absorption peak wavelength was 419 nm.

### (Example 5)

First, 5 mL of an aqueous colloidal dispersion of gold nano-particles, 10 mL of chloroform, and 50 mg of the polymer obtained in Production Example 4 were mixed. Then, in a water bath at a temperature controlled to 25°C, the resultant mixture was irradiated with ultrasonic waves of 80 W and 38 kHz under stirring through temperature the control water of the water bath. After the stirring and ultrasonic irradiation were continued for 24 hours, the mixture was allowed to stand to separate between an aqueous layer and a chloroform layer, thereby obtaining a chloroform solution of gold nano-particles. A separately prepared 20 wt% chloroform solution of a general-purpose polystyrene resin (G9305 manufactured by A & M Styrene Co., Ltd., Mw = 180,000, total light transmittance 91%) and the gold nano-particle chloroform solution were uniformly mixed at a ratio of 1:1, and the resulting solution was uniformly applied in a sealed vessel. The solvent was removed by spontaneous evaporation over about one day to produce a polystyrene resin film containing gold nano-particles. The appearance of the resulting resin film was uniformly transparent and tinged with purple, and the average thickness was 60 µm. The ratio of the independent particles not in contact with each other was calculated from a TEM micrograph. As a result, the ratio was 99%. Also, in measurement of the UV-VIS absorption wavelength of the film, the absorption peak wavelength was 531 nm.

### (Comparative Example 4)

A polystyrene resin film containing gold nano-particles was produced by the same method as in Example 5 except that 50 mg of dodecanethiol was used in place of 50 mg of the polymer obtained in Production Example 4. The appearance of the resulting resin film was nonuniform due to such a degree of particle aggregation that aggregated particles could be observed with the eyes. Furthermore, the resin film had an average thickness of 60 µm. Fig. 2 shows a TEM micrograph of the resin film. As a result of calculation of the ratio of the independent particles not in contact with each other from the TEM micrograph, the ratio was 2%. Also, in measurement of the UV-VIS absorption wavelength of the film, the absorption peak wavelength was 580 nm.

### (Example 6)

First, 5 mL of a colloidal dispersion of iron-platinum nano-particles in ethylene glycol, 10 mL of chloroform, and 100 mg of the polymer obtained in Production Example 2 were mixed. Then, in a water bath at a temperature controlled to 20°C, the resultant mixture was irradiated with ultrasonic waves of 80 W and 38 kHz under stirring through the temperature control water of the water bath. After the stirring and ultrasonic irradiation were continued for 24 hours, the mixture was allowed to stand to separate between an ethylene glycol layer and a chloroform layer. An operation of adding 10 mL of pure water to the chloroform layer, stirring the mixture for 1 hour, and then separating off an aqueous layer was repeated three times to obtain a chloroform solution of iron-platinum nano-particles. The same 20 wt% PMMA resin chloroform solution as that used in Example 1 and the chloroform solution of iron-platinum nano-particles were uniformly mixed at a ratio of 1:1, and the resulting solution was uniformly applied in a sealed vessel. The solvent was removed by spontaneous evaporation over about one day to produce a PMMA resin film containing iron-platinum nano-particles. The appearance of the resulting resin film was uniformly transparent and tinged with brown, and the average thickness was 60 µm. As a result of calculation of the ratio of the independent particles not in contact with each other from a TEM micrograph, the ratio was 98%.

### (Comparative Example 5)

A PMMA resin film containing iron-platinum nano-particles was produced by the same method as in Example 6 except that 100 mg of dodecanethiol was used in place of 100 mg of the polymer obtained in Production Example 2. The appearance of the resulting resin film was substantially uniform as observed with the eyes, and the average thickness was 60 µm. As a result of calculation of the ratio of the independent particles not in contact with each other from a TEM micrograph, precise measurement was difficult because the particles were aggregated in many layers to form large aggregates. However, the roughly calculated ratio was about 12%.

### (Example 7)

First, 2 mg of a CdSe solid powder and 100 mg of the polymer obtained in Production Example 2 were dissolved in 5.5 mL of chloroform. Then, in a water bath at a temperature controlled to 23°C, the resultant solution was irradiated with ultrasonic waves of 80 W and 38 kHz under stirring through the temperature control water of the water bath. After the stirring and ultrasonic irradiation were continued for 24 hours, 20 mL of absolute methanol was added to the solution to produce an insoluble substance. The insoluble substance was separated from the supernatant by centrifugal separation and then dried in vacuum at room temperature for about one day to obtain a surface-modified CdSe nano-particle solid powder. The resultant surface-modified ultrafine particles were dispersed in 5.5 mL of chloroform, and 400 mg of the polymer prepared in Production Example 3 was further added to the dispersion. Then, in a water bath at a temperature controlled to 20°C, the resultant mixture was irradiated with ultrasonic waves of 80 W and 38 kHz under stirring through the temperature control water of the water bath. After the stirring and ultrasonic irradiation were continued for 24 hours, the mixture was allowed to stand to obtain a chloroform solution of CdSe nano-particles. Separately, 500 mg of a commercial PMMA resin (manufactured by Aldrich, Mw = 120,000, total light transmittance 93%) was dissolved in 2.5 ml of chloroform to prepare a PMMA chloroform solution. The PMMA chloroform solution and the CdSe nano-particle chloroform solution were uniformly mixed, and the resulting mixture was uniformly applied in a sealed vessel. The solvent was removed by spontaneous evaporation over about one day to produce a PMMA resin film containing CdSe nano-particles dispersed therein. The appearance of the resulting film was uniformly transparent, and the average thickness was 60 µm. As a result of calculation of the ratio of the independent particles not in contact with each other from a TEM micrograph, the ratio was 95%. Furthermore, in irradiation of the resin film with exciting light at a wavelength of 299 nm using a luminescence spectrometer, the emitted light had a peak wavelength of 515 nm and a half-value width of 55 nm.

### (Example 8)

A PMMA resin film containing core-shell CdSe ultrafine particles having ZnS shells was produced by the same method as in Example 2 except that 2 mg of the core-shell CdSe nano-particle solid powder having ZnS shells obtained in Production Example 1 was used in place of 2 mg of CdSe solid powder. The appearance of the resulting film was uniformly transparent, and the average thickness was 60 µm. As a result of calculation of the ratio of the independent particles not in contact with each other from a TEM micrograph, the ratio was 94%. Furthermore, in irradiation of the resin film with exciting light at a wavelength of 468 nm using a luminescence spectrometer, the emitted light had a peak wavelength of 603 nm and higher luminescence intensity than that in Example 2.

### (Comparative Example 6)

A PMMA resin film containing CdSe nano-particles was produced by the same method as in Example 7 except that 500 mg of a commercial PMMA resin (manufactured by Aldrich, Mw = 120,000, total light transmittance 93%) was used in place of 100 mg + 400 mg of the polymer produced in Production Example 2. The appearance of the resulting resin film was apparently uniform, and the average thickness was 60 µm. As a result of calculation of the ratio of the independent particles not in contact with each other from a TEM micrograph, the ratio was 2%. Furthermore, in irradiation of the resin film with exciting light at a wavelength of 299 nm using a luminescence spectrometer, the emitted light had a peak wavelength of 532 nm and a half-value width of 70 nm. It was thus found that the peak was shifted to the long wavelength side by aggregation of nano-particles.

### (Comparative Example 7)

A PMMA resin film containing CdSe nano-particles was produced by the same method as in Example 7 except that 50 mg of dodecanethiol was used in place of 500 mg of the polymer obtained in Production Example 2. The appearance of the resulting resin film was nonuniform due to such a degree of particle aggregation that aggregated particles could be observed with the eyes, and the average thickness was 60 µm. As a result of calculation of the ratio of the independent particles not in contact with each other from a TEM micrograph, the ratio was 2%. Furthermore, in irradiation of the resin film with exciting light at a wavelength of 365 nm using a luminescence spectrometer, a clear luminescence peak was not observed.

### (Example 9)

First, 5 mL of an aqueous colloidal dispersion of gold nano-particles, 40 mg of the polymer obtained in Production Example 5, and 5 mL of pure water were mixed. Then,' in a water bath at a temperature controlled to 25°C, the resultant mixture was irradiated with ultrasonic waves of 80 W and 38 kHz under stirring through the temperature control water of the water bath. After the stirring and ultrasonic irradiation were continued for 24 hours, the mixture was allowed to stand to produce surface-modified gold nano-particles. Then, a separately prepared 20 wt% aqueous solution of polyvinyl alcohol resin (Poly(vinyl Alcohol) manufactured by Aldrich, 87 to 89% hydrolyzed, Mw = 85,000 to 146,000) and the aqueous solution of the surface-modified gold nano-particles were uniformly mixed at a ratio of 1:1, and the resulting mixture was uniformly applied in a sealed vessel. The water was removed by spontaneous evaporation over about one week to produce a polyvinyl alcohol resin film containing gold nano-particles. The appearance of the resulting film was uniformly transparent and tinged with purple, and the average thickness was 60 µm. As a result of calculation of the ratio of the independent particles not in contact with each other from a TEM micrograph, the ratio was 95%. Furthermore, in measurement of the UV-VIS absorption wavelength of the film, the absorption peak wavelength was 545 nm.

### (Comparative Example 8)

First, 5 mL of an aqueous colloidal dispersion of gold nano-particles, 5 mL of pure water, and 10 mL of a 20 wt% aqueous solution of polyvinyl alcohol resin (Poly(vinyl Alcohol) manufactured by Aldrich, 87 to 89% hydrolyzed, Mw = 85,000 to 146,000) were uniformly mixed, followed by stirring for 24 hours. Then, the resulting mixture was uniformly applied in a sealed vessel. The water was removed by spontaneous evaporation over about one week to produce a polyvinyl alcohol resin film containing gold nano-particles. The appearance of the resulting film was nonuniform due to such a degree of particle aggregation that aggregated particles could be observed with the eyes, and the average thickness was 60 µm. As a result of calculation of the ratio of the independent particles not in contact with each other from a TEM micrograph, the ratio was 0%. Furthermore, in measurement of the UV-VIS absorption wavelength of the film, measurement of the absorption peak wavelength was difficult because of the low transparency of the film.

### (Example 10)

In order to produce a polymethacrylic acid resin film containing gold nano-particles, 40 mg of the polymer produced in Production Example 6 was used instead of 40 mg of the polymer produced in Production Example 5, and a 20 wt% aqueous solution of polymethacrylic acid resin (manufactured by Polyscience Inc., Mw = about 100,000) was used instead of a 20 wt% aqueous solution of polyvinyl alcohol resin. The other procedures were the same as in Example 9. The appearance of the resulting resin film was uniformly transparent and tinged with purple, and the average thickness was 60 µm. As a result of calculation of the ratio of the independent particles not in contact with each other from a TEM micrograph, the ratio was 96%. Furthermore, in measurement of the UV-VIS absorption wavelength of the film, the absorption peak wavelength was 543 nm.

### (Comparative Example 9)

A polymethacrylic acid resin film containing gold nano-particles was produced by the same method as in Comparative Example 8 except that a 20 wt% aqueous solution of polymethacrylic acid resin (manufactured by Polyscience Inc., Mw = about 100,000) was used in place of a 20 wt% aqueous solution of polyvinyl alcohol resin. The appearance of the resulting resin film was nonuniform due to such a degree of particle aggregation that aggregated particles could be observed with the eyes, and the average thickness was 60 µm. As a result of calculation of the ratio of the independent particles not in contact with each other from a TEM micrograph, the ratio was 0%. Furthermore, in measurement of the UV-VIS absorption wavelength of the film, measurement of the absorption peak wavelength was difficult because of the low transparency of the film.

### Industrial Applicability

According to the present invention, ultrafine particles can be uniformly dispersed in a resin without aggregation of the particles, thereby holding the ultrafine particles in a resin composition while maintaining the various excellent properties inherently possessed by the ultrafine particles. Therefore, the present invention is useful for the purpose of protecting ultrafine particles, and a molding, a film, and the like can be molded from the resin composition to permit free mass-production of resin moldings maintaining the dispersibility of the ultrafine particles. Consequently, ultrafine particles which have been difficult to handle so far can be actively utilized in various fields. It is thus expected to greatly contribute to practical applications of products in the field of nano-technology, thereby causing great industrial usefulness.

## Claims

1. A resin composition containing ultrafine particles produced by mixing polymer-modified ultrafine particles in a resin, wherein the polymer-modified ultrafine particles are produced by modifying the surfaces of ultrafine particles with a polymer having a mercapto group at one end, and the polymer having a mercapto group at one end is produced by treating a polymer with a treating agent, the polymer being prepared by radical polymerization of a radically polymerizable unsaturated monomer in the presence of a thiocarbonylthio group-containing compound.

2. The resin composition containing ultrafine particles according to claim 1, wherein the thiocarbonylthio group-containing compound is represented by general formula (1): 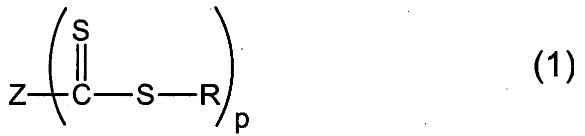 (wherein R represents a monovalent organic group having 1 or more carbon atoms; Z represents a sulfur atom (when p = 2), an oxygen atom (when p = 2), a nitrogen atom (when n = 3), or a p-valent organic group having 1 or more carbon atoms; p represents an integer of 1 or more; and when p is 2 or more, Rs may be the same or different).

3. The resin composition containing ultrafine particles according to claim 1 or 2, wherein the number-average primary particle size of the ultrafine particles in an unaggregated state is 100 nm or less.

4. The resin composition containing ultrafine particles according to any one of claims 1 to 3, wherein 80% or more of the total of the ultrafine particles in the resin are independently present.

5. The resin composition containing ultrafine particles according to any one of claims 1 to 4, wherein the ultrafine particles are metal ultrafine particles and/or semiconductor ultrafine particles.

6. The resin composition containing ultrafine particles according to claim 5, wherein the ultrafine particles contain 10% by weight or more of at least one metal selected from the group consisting of gold, platinum, silver, palladium, rhodium, ruthenium, and cobalt.

7. The resin composition containing ultrafine particles according to claim 5, wherein the semiconductor ultrafine particles are particles of at least one compound selected from the group consisting of compounds each including a group 14 element and a group 16 element in the periodic table, compounds each including a group 13 element and a group 15 element in the periodic table, compounds each including a group 13 element and a group 16 element in the periodic table, compounds each including a group 12 element and a group 16 element in the periodic table, compounds each including a group 15 element and a group 16 element in the periodic table, compounds each including a group 4 element and a group 16 element in the periodic table, and compounds each including a group 2 element and a group 16 element in the periodic table.

8. The resin composition containing ultrafine particles according to any one of claims 1 to 7, wherein the resin transmits visible light.
